# EUROPEAN PATENT SPECIFICATION

(11) **EP 3 966 547 B1**
(45) Date of publication and mention of the grant of the patent: **13.03.2024**
(21) Application number: 19725596.1
(22) Date of filing: 09.05.2019
(51) Int. Cl.: G01N 9/00, G01N 11/16, G01F 23/296

(54) **DETERMINING AND IDENTIFYING ANOMALIES IN FORK METERS**
BESTIMMUNG UND IDENTIFIZIERUNG VON ANOMALIEN IN GABELZÄHLERN
DÉTERMINATION ET IDENTIFICATION D'ANOMALIES DANS DES COMPTEURS À RAMIFICATION

(43) Date of publication of application: 16.03.2022
(73) Proprietor: Micro Motion, Inc., Boulder, CO 80301 (US)
(72) Inventor: SMITH, Kevin F., Fort Collins, Colorado 80526 (US)
(74) Representative: Ellis, Christopher Paul
(86) International application number: PCT/US2019/031536
(87) International publication number: WO 2020/226654

(56) References cited:
- JP-A- H11 173 968
- US-A1- 2016 334 316
- US-A1- 2017 343 458
- US-A1- 2018 219 556

## Description

### TECHNICAL FIELD

The embodiments described below relate to vibratory sensors and, more particularly, to determining and identifying anomalies in vibratory sensors.

### BACKGROUND

Vibratory sensors, such as vibratory densitometers and vibratory viscometers, operate by detecting motion of a vibrating element that vibrates in the presence of a fluid to be characterized. The vibratory element has a vibration response that may have a vibration response parameter such as a resonant frequency or quality factor Q. The vibration response of the vibrating element is generally affected by the combined mass, stiffness, and damping characteristics of the vibrating element in combination with the fluid. Properties associated with the fluid, such as density, viscosity, temperature and the like, can be determined by processing a vibration signal or signals received from one or more motion transducers associated with the vibrating element. The processing of the vibration signal may include determining the vibration response parameter.

Vibratory sensors have a vibratory element and meter electronics coupled to the vibratory element. Vibratory sensors include drivers for vibrating the vibratory element and a pickoff that creates a vibration signal in response to the vibration. The vibration signal is typically a continuous time or analog signal. The meter electronics receives the vibration signal and processes the vibration signal to generate one or more fluid characteristics or fluid measurements. The meter electronics determines both the frequency and the amplitude of the vibration signal. The frequency and amplitude of the vibration signal can be further processed to determine a density of the fluid.

Vibratory sensors provide a drive signal for the driver using a closed-loop or open-loop circuit. The drive signal is typically based on the received vibration signal. The circuit modifies or incorporates the vibration signal or parameters of the vibration signal into the drive signal. For example, the drive signal may be an amplified, modulated, or an otherwise modified version of the received vibration signal. The received vibration signal can therefore comprise a feedback that enables the circuit to achieve a target frequency. Using the feedback, the circuit incrementally changes the drive frequency and monitors the vibration signal until the target frequency is reached.

Fluid properties, such as the viscosity and density of the fluid, can be determined from the frequencies where the phase difference between the drive signal and the vibration signal is, for instance, 135° and 45°. These desired phase differences, denoted as first off-resonant phase difference and second off-resonant phase difference, can correspond to the half power or 3dB frequencies. The first off-resonant frequency is defined as a frequency where the first off-resonant phase difference is about 135°. The second off-resonant frequency is defined as a frequency where the second off-resonant phase difference is about 45°. Density measurements made at the second off-resonant frequency can be independent of fluid viscosity. Accordingly, density measurements made where the second off-resonant phase difference is 45° can be more accurate than density measurements made at other phase differences.

When operating, elements of a fork vibratory meter that are exposed to the flow fluid may experience shifts in efficiency due to anomalous conditions. For instance, elements that are immersed in fluid flow may experience variation due to a significant fluctuation in density and/or viscosity. This may be due to entrained foreign particles or entrained gas. The elements immersed in a fluid may also accrue build-up such as a film or particulates. US 2017/343458 A1 discloses method of controlling a vibration of a vibratory element based on a phase error, the fluid can comprise a multi-phase fluid, such as a liquid that includes entrained gas, entrained solids, multiple liquids, or combinations thereof. The method also comprises determining a phase error between a target phase difference and the measured phase difference and calculating one or more vibration control terms with the determined phase error.

The elements that are immersed in a flow fluid may also experience erosion or corrosion due to physical interactions or chemical reactions, respectively. Also, anomalous readings can be characteristic of a manufacturing or installation anomaly. The elements immersed in a fluid may include a vibratory element. This vibrating element may be affected by any of these anomalies, as the measured properties of the vibrating element and fluids are affected via anomalous sensor readings. Also, a faulty installation or manufacture can cause unpredictable readings.

Existing meters and flow monitoring equipment require more effective means by which to determine and identify the nature of a fault in a meter system while the meter system is operating. The current approach is to notice anomalies in the resulting readings and remove the meters from operating conditions to inspect the meters.

Accordingly, there is a need for determining the existence of a fault and identifying which fault is causing an issue in a vibratory flowmeter.

### SUMMARY

In an embodiment, a method for determining a process anomaly is provided. An embodiment of a method for determining a process anomaly in a fluid flow system, the system having a meter with immersed elements immersed in a fluid of a fluid flow is described, the method comprises determining, using a data processing circuit, a measured density of the fluid in the fluid flow system. The method further comprises determining, using the data processing circuit, whether the fluid flow system is experiencing a density anomaly based on a relationship between the measured density and an expected density of the fluid in the fluid flow system. The method further comprises determining, using the data processing circuit, a measured phase difference of vibrations of the immersed elements of the meter. The method further comprises determining, using the data processing circuit, whether the fluid flow system is experiencing a phase anomaly based on a relationship between the measured phase difference and a target phase difference of the vibrations of the immersed elements in the fluid flow. The method further comprises identifying an anomaly of the fluid flow system based on the determination of whether there is a density anomaly and the determination of whether there is a phase anomaly.

In another embodiment, a data processing circuit for determining an anomaly is provided. In an embodiment of a data processing circuit which is communicatively coupled to and/or integrated into a meter electronics of a meter, the meter having vibratory elements, a driver for driving vibrations in the vibratory elements, and at least one sensor to measure vibrations of vibrational elements, the meter electronics are configured to determine a measured phase difference and a measured density. The data processing circuit is further configured to, determine a measured density of a fluid in the fluid flow system, determine whether the fluid flow system is experiencing a density anomaly based on a relationship between the measured density and an expected density of the fluid in the fluid flow system, determine a measured phase difference of vibrations of the vibratory elements of the meter, determine, using the data processing circuit, whether the fluid flow system is experiencing a phase anomaly based on a relationship between the measured phase difference and a target phase difference of the vibrations of the vibratory elements in the fluid flow, and identify an anomaly of the fluid flow system based on the determination of a density anomaly and the determination of a phase anomaly.

### ASPECTS

The first aspect of the invention is disclosed according to claim 1. Further aspects of the invention are disclosed in the dependent claims 2-9.

The first aspect of a data processing circuit according the invention is disclosed according to claim 10. Further aspects of the data processing circuit are disclosed in the dependent claims 11-16.

### BRIEF DESCRIPTION OF THE DRAWINGS

The same reference number represents the same element on all drawings. It should be understood that the drawings are not necessarily to scale.
FIG. 1 shows a vibratory sensor comprising a vibratory element and meter electronics coupled to the vibratory element.
FIG. 2 shows a block diagram of an embodiment of the data processing circuit 132.
FIG. 3 shows a flowchart of an embodiment of a method 300 for determining and identifying an anomaly.
FIG. 4 shows a flowchart of an embodiment of a method 400 for determining and identifying a density anomaly.
FIG. 5 shows a flowchart of an embodiment of a method 500 for determining a phase anomaly.
FIG. 6 shows a flowchart of an embodiment of a method 600 for determining whether there is entrained gas in a system.
FIG. 7 shows a flowchart of an embodiment of a method 700 for determining whether there is build-up on a meter.
FIG. 8 shows a flowchart of an embodiment of a method 800 for determining whether a gas entrainment anomaly is being confused with an erosion anomaly.
FIG. 9 shows a flowchart of an embodiment of a method 900 for determining whether a build-up anomaly is being confused with a corrosion anomaly.
FIG. 10 shows a flowchart of an embodiment of a method 1000 for responding to an anomaly detection.
FIG. 11a shows a two-axis graph 1100a comparing live phase and density measurements to expected values with respect to time when a fork density meter is operating without an anomaly, according to an embodiment.
FIG. 11b shows a graph 1100b of deviation of live phase from expected phase difference when a fork density meter is operating without an anomaly, according to an embodiment.
FIG. 12a shows a two-axis graph 1200a comparing live phase and density measurements to expected values with respect to time when a fork density meter is operating with an entrained gas anomaly, according to an embodiment.
FIG. 12b shows a graph of deviation of live phase from expected phase difference when a fork density meter is operating with an entrained gas anomaly, according to an embodiment.
FIG. 13a shows a two-axis graph 1300a comparing live phase and density measurements to expected values with respect to time when a fork density meter is operating with a build-up anomaly, according to an embodiment.
FIG. 13b shows a graph of deviation of live phase from expected phase difference when a fork density meter is operating with a build-up anomaly, according to an embodiment.
FIG. 14 shows a two-axis graph 1400 comparing fork phase to a fork phase with respect to time when a fork viscosity meter is operating without an anomaly, according to an embodiment.

### DETAILED DESCRIPTION

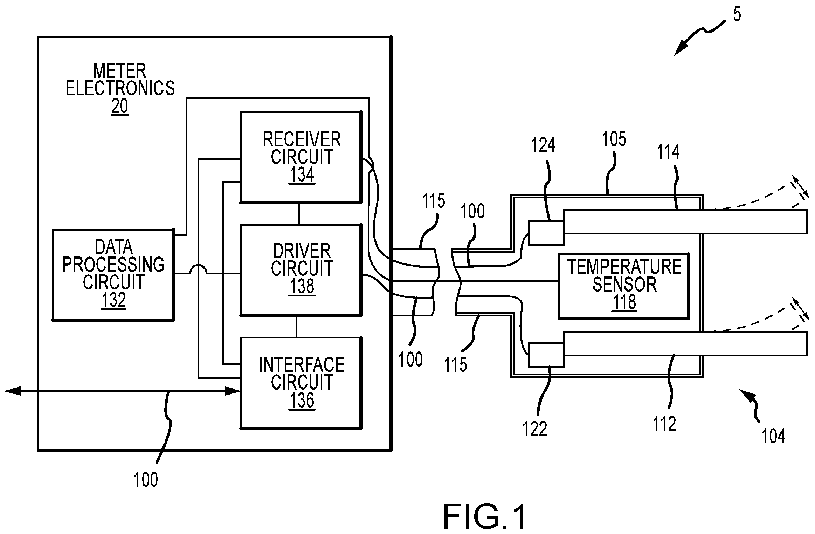

FIGS. 1-14 and the following description depict specific examples to teach those skilled in the art how to make and use the best mode of embodiments of determining a vibration response parameter of a vibratory element. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of determining the vibration response parameter of the vibratory element. As a result, the embodiments described below are not limited to the specific examples described below, but only by the claims.

**FIG.** 1 shows a vibratory sensor 5 of a meter according to an embodiment. The vibratory sensor 5 may comprise a vibratory element 104 and meter electronics 20, wherein the vibratory element 104 is coupled to the meter electronics 20 by a lead or leads 100. In some embodiments, the vibratory sensor 5 may comprise a vibratory tine sensor or fork density or fork viscosity sensor. However, other vibratory sensors are contemplated and are within the scope of the description and claims. The meter may be a meter configured to determine fluid flow characteristics and/or may be specifically configured to detect anomalies. An embodiment wherein the meter is exclusively an anomaly detector, as opposed to a meter for determining other fluid measurements is contemplated, perhaps not configured to provide a user or external devices data representing fluid or fluid flow characteristics other than data representing anomalies and/or responses to anomalies.

The vibratory sensor 5 may be at least partially immersed into a fluid to be characterized. The fluid can comprise a liquid or a gas. Alternatively, the fluid can comprise a multi-phase fluid, such as a liquid that includes entrained gas, entrained solids, multiple liquids, or combinations thereof. Some exemplary fluids include cement slurries, petroleum products, or the like. The vibratory sensor 5 may be mounted in a pipe or conduit, a tank, a container, or other fluid vessels. The vibratory sensor 5 can also be mounted in a manifold or similar structure for directing a fluid flow. However, other mounting arrangements are contemplated and are within the scope of the description and claims.

The vibratory sensor 5 operates to provide fluid measurements. The vibratory sensor 5 may provide fluid measurements including one or more of a fluid density and a fluid viscosity for a fluid, including flowing or non-flowing fluids. The vibratory sensor 5 may provide fluid measurements including a fluid mass flow rate, a fluid volume flow rate, density of a fluid, viscosity of a fluid, and/or a fluid temperature. This listing is not exhaustive and the vibratory sensor 5 may measure or determine other fluid characteristics.

The meter electronics 20 can provide electrical power to the vibratory element 104 via the lead or leads 100. The meter electronics 20 controls operation of the vibratory element 104 via the lead or leads 100. For example, the meter electronics 20 may generate a drive signal and provide the generated drive signal to the vibratory element 104, wherein the vibratory element 104 generates a vibration in one or more vibratory components using the generated drive signal. The generated drive signal can control the vibrational amplitude and frequency of the vibratory element 104. The generated drive signal can also control the vibrational duration and/or vibrational timing.

The meter electronics 20 can also receive a vibration signal or signals from the vibratory element 104 via the lead or leads 100. The meter electronics 20 may process the vibration signal or signals to generate a density measurement, for example. The meter electronics 20 processes the vibration signal or signals received from the vibratory element 104 to determine a frequency of the signal or signals. Further, or in addition, the meter electronics 20 processes the vibration signal or signals to determine other characteristics of the fluid, such as a viscosity or a phase difference between signals, that can be processed to determine a fluid flow rate, for example. As can be appreciated, the phase difference is typically measured or expressed in spatial units such as degrees or radians although any suitable unit can be employed such as time-based units. If time-based units are employed, then the phase difference may be referred to by those in the art as a time delay between the vibration signal and the drive signal. Other vibrational response characteristics and/or fluid measurements are contemplated and are within the scope of the description and claims.

The meter electronics 20 is coupled to the vibratory element 104 by a shaft 115 in the embodiment shown. The shaft 115 may be of any desired length. The shaft 115 may be at least partially hollow. Wires or other conductors may extend between the meter electronics 20 and the vibratory element 104 through the shaft 115. The meter electronics 20 includes circuit components such as a data processing circuit 132, receiver circuit 134, an interface circuit 136, and a driver circuit 138. In the embodiment shown, the receiver circuit 134 and the driver circuit 138 are directly coupled to the leads of the vibratory element 104. Alternatively, the meter electronics 20 can comprise a separate component or device from the vibratory element 104, wherein the receiver circuit 134 and the driver circuit 138 are coupled to the vibratory element 104 via the lead or leads 100.

In the embodiment shown, the vibratory element 104 of the vibratory sensor 5 comprises a tuning fork structure, wherein the vibratory element 104 is at least partially immersed in the fluid being measured. The vibratory element 104 includes a housing 105 that can be affixed to another structure, such as a pipe, conduit, tank, receptacle, manifold, or any other fluid-handling structure. The housing 105 retains the vibratory element 104 while the vibratory element 104 remains at least partially exposed. The vibratory element 104 is therefore configured to be immersed in the fluid. The vibratory sensor 5 may also have a temperature sensor 118 to measure temperature, in order to provide temperature information for flow calculations and anomaly detection.

The vibratory element 104 in the embodiment shown includes first and second tines 112 and 114 that are configured to extend at least partially into the fluid. The first and second tines 112 and 114 comprise elongated elements that may have any desired cross-sectional shape. The first and second tines 112 and 114 may be at least partially flexible or resilient in nature. The vibratory sensor 5 further includes corresponding first and second piezo elements 122 and 124 that comprise piezo-electric crystal elements. The first and second piezo elements 122 and 124 are located adjacent to the first and second tines 112 and 114, respectively. The first and second piezo elements 122 and 124 are configured to contact and mechanically interact with the first and second tines 112 and 114, respectively. The first and second piezo elements 122 and 124 may also be considered immersed elements for the purposes of this specification.

The first piezo element 122 is in contact with at least a portion of the first tine 112. The first piezo element 122 is also electrically coupled to the driver circuit 138. The driver circuit 138 provides the generated drive signal to the first piezo element 122. The first piezo element 122 expands and contracts when subjected to the generated drive signal. As a result, the first piezo element 122 may alternatingly deform and displace the first tine 112 from side to side in a vibratory motion (see dashed lines), disturbing the fluid in a periodic, reciprocating manner. The first piezo element 122 may also be called a driver 122 for the purposes of this specification and the claims. While the first piezo element 122 is shown as an exemplary piezo driver 122, any driver 122 used in the art is contemplated by this specification.

The second piezo element 124 is shown as coupled to a receiver circuit 134 that produces the vibration signal corresponding to the deformations of the second tine 114 in the fluid. Movement of the second tine 114 causes a corresponding electrical vibration signal to be generated by the second piezo element 124. The second piezo element 124 transmits the vibration signal to the meter electronics 20. The second piezo element 124 may also be called a sensor 124 or represent at least one sensor 124 for the purposes of this specification and the claims. It should be noted that, despite the embodiment shown being presented with a piezo element 124, all sensors 124 known in the art are contemplated for the purposes of this specification.

The meter electronics 20 includes the interface circuit 136. The interface circuit 136 can be configured to communicate with external devices. The interface circuit 136 communicates a vibration measurement signal or signals and may communicate determined fluid characteristics to one or more external devices. The meter electronics 20 can transmit vibration signal characteristics via the interface circuit 136, such as a vibration signal frequency and a vibration signal amplitude of the vibration signal. The meter electronics 20 may transmit fluid measurements via the interface circuit 136, such as a density and/or viscosity of the fluid, among other things. Other fluid measurements are contemplated and are within the scope of the description and claims. In addition, the interface circuit 136 may receive communications from external devices, including commands and data for generating measurement values, for example. In some embodiments, the receiver circuit 134 is coupled to the driver circuit 138, with the receiver circuit 134 providing the vibration signal to the driver circuit 138. Any data transmitted or received by or between the receiver circuit 134 and the driver circuit 138 may be further transmitted to the data processing circuit 132.

The driver circuit 138 generates the drive signal for the vibratory element 104. The driver circuit 138 can modify characteristics of the generated drive signal. The drive may be used by the driver circuit 138 to generate the drive signal and supply the generated drive signal to the vibratory element 104 (*e.g.,* to the first piezo element/driver 122). In some embodiments, the drive generates the drive signal to achieve a target phase difference, commencing at an initial frequency. The drive may or may not operate based on feedback from the vibration signal.

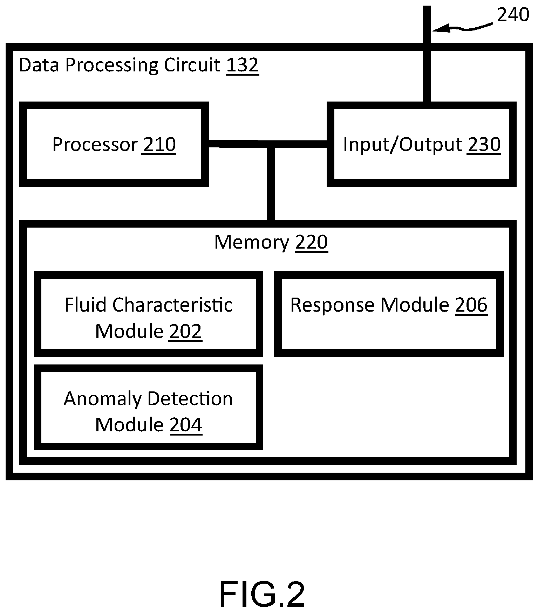

The data processing circuit 132 is a circuit that processes data generated and/or received by the receiver circuit 134 and the driver circuit 138 and determines at least one of fluid characteristic data and anomaly data. The data processing circuit 132 may be communicatively coupled to all, none, and/or any combination of elements in the meter electronics 20. The data processing circuit 132 may be an embodiment of the data processing circuit 132 presented in Figure 2.

FIG. 2 shows a block diagram of an embodiment of the data processing circuit 132. The data processing circuit 132 may be communicatively coupled to any, some, or all of the components of the meter electronics 20. The data processing circuit 132 may be an embodiment of the data processing circuit 132 of Figure 1. In various embodiments the data processing circuit 132 may be comprised of application specific integrated circuits or may have a discrete processor and memory elements, the processor elements for processing commands from and storing data on the memory elements. In various embodiments, the data processing circuit 132 may be integral to a meter electronics 20 or may be communicatively coupled to a meter electronics 20. The data processing circuit 132 may be configured to store data representing parameters received from elements of the meter electronics and other data preinstalled and/or received from elements of the meter electronics and/or external devices.

The data processing circuit 132 may have a processor 210, a memory 220, and an input/output 230. The memory 220 may store and/or may have integrated circuits representing, for instance, a fluid characteristic module 202, an anomaly detection module 204, and a response module 206. In various embodiments, the data processing circuit 132 may have other computer elements integrated into the stated elements or in addition to or in communication with the stated computer elements, for instance, buses, other communication protocols, and the like.

The processor 210 is a data processing element. The processor 210 may be any element used for processing such as a central processing unit, application specific integrated circuit, other integrated circuit, an analog controller, graphics processing unit, field programmable gate array, any combination of these or other common processing elements and/or the like.

The memory 220 is a device for electronic storage. The memory 220 may be any non-transitory storage medium and may include one, some, or all of a hard drive, solid state drive, volatile memory, integrated circuits, a field programmable gate array, random access memory, read-only memory, dynamic random-access memory, erasable programmable read-only memory, electrically erasable programmable read-only memory, and/or the like. The processor 210 may execute commands from and utilize data stored in the memory 220.

The data processing circuit 132 may be configured to store any data that will be used by the fluid characteristic module 202, an anomaly detection module 204, and a response module 206 and may store historical data for any amount of time representing any parameter received or used by the fluid characteristic module 202, the anomaly detection module 204, and/or the response module 206 in the memory 220. The data processing circuit 132 may also store any data that represents determinations of anomalies or data used to determine anomalies in the memory 220, perhaps with time stamps representing when the data was taken. While the fluid characteristic module 202, the anomaly detection module 204, and the response module 206 are displayed as three separate and discrete modules, the specification contemplates any number (even one or the three as specified) and variety of modules working in concert to accomplish the methods expressed in this specification.

The fluid characteristic module 202 is a module that processes data representing sensor readings taken from the meter and interprets the data to provide meaningful measurements. This fluid characteristic module 202 may be a software program, or may be an integrated circuit, and the fluid characteristic module 202 may itself store data or may store data in a memory device 220 of the data processing circuit 132. This data from the meter may be received as data representative of physical characteristics or may be data representative of raw voltage and/or current data that represent direct sensor readings that require interpretation in order to determine the underlying physical meaning. The fluid characteristic module 202 may receive data representing temperature readings from a temperature sensor 118 of the sensor 5. The fluid characteristic module 202 may receive data representing the drive signal or data already converted to represent the frequency at which the vibrating element is vibrating, perhaps from the first piezo element 122 and/or the driver circuit 138. The fluid characteristic module 202 may receive data representing the vibrational response or data already converted to represent the frequency of the vibrational response, perhaps from the second piezo element 124 and/or the receiver circuit 134. The fluid characteristic module 202 may also store or command memory in the data processing circuit 132 to store certain constants and meter configuration information for determining density, viscosity, volumetric flowrate, and/or mass flowrate of a fluid flow, and the data fluid characteristic module 202 may be configured to determine the density, viscosity, volumetric flowrate, and/or mass flowrate of a fluid flow. For instance, the fluid characteristic module 202 may store or cause the data processing circuit 132 to store data representing a mass or density of different components of the meter assembly, perhaps even specifically of tines to be at least partially immersed in fluid flow. The data fluid characteristic module 202 may also store or cause the data processing circuit 132 to store physical configurations of the meter elements, perhaps including the length and mass of the tines 112 and 114.

The fluid characteristic module 202 may use these stored and/or received data to determine a density and/or a viscosity. The density may be determined by accounting for the mass of tines 112 and 114, temperature of the flowing material and the dimensions of the tines 112 and 114 using methods that are known in the art. The viscosity may be determined by an amount of power loss and associated bandwidth or the time of flight seen by a pickoff using methods that are known in the art. The fluid characteristic module 202 may also be configured to detect anomalies, the anomalies including, for instance, a gas entrainment, a film or other deposition on an immersed element, corrosion or erosion of an immersed element, and/or a manufacturing or installation issue. The fluid characteristic module 202 may be configured to collect and process data and anomalies during use of the vibratory meter, and/or the vibratory meter may not have to be removed from an operating fluid flow in order to determine and identify an anomaly.

The fluid characteristic module 202 may be configured to receive or determine a measured phase difference. The measured phase difference can be determined by comparing data representing vibrations of a fork densitometer or viscometer. For instance, the phase difference may represent a comparison between data representing the frequency of a vibratory response received from the receiver circuit 134 and data representing a frequency at which a driver drives the tines 112 and 114 of the fork densitometer or viscometer received from the driver circuit 138. Alternatively, the phase difference may represent a comparison between data representing the frequency of a vibratory response received from the receiver circuit 134 and data representing a frequency at which the driven first tine 112 of the fork densitometer vibrates received from the driver circuit 138. Methods for determining the measured phase difference are well-established in the art. For purposes of the specification, the measured phase difference may be designated the live phase or live phase measurement.

The fluid characteristic module 202 may be configured to operate with the driver circuit 138 and the receiving circuit 134 to drive a meter to attempt to lock at a predetermined phase difference, designated the target phase difference. The target phase difference may be alternatively designated the desired phase difference or the phase lock target. The target phase difference may be, for instance, 45°, 90°, 135°, and/or may be any phase difference in the range of 45° to 135°. The extent to which the measured phase difference deviates from the target phase difference is the phase error. The fluid characteristic module 202 and/or the anomaly detection module 204 may be configured to calculate the phase error. The phase error may be represented as a magnitude or may be represented as a vector relative quantity that is characteristically below (negative) or above (positive) a target phase difference. All positive quantitative values in this specification can be construed to be either or both of signless magnitudes or positive values.

The anomaly detection module 204 is a module used to detect anomalies in the readings of a meter, perhaps indicative of anomalies in the meter or fluid of a fluid flow. The anomaly detection module 204 may communicate with the fluid characteristic module 202 to determine anomalies in the meter or fluids interacting with the meter. The anomaly detection module 204 as discussed, until specified otherwise later, refers to an embodiment of an anomaly detection module 204 of a fork density meter that uses phase difference to make determinations. An anomaly detection module 204 for a fork viscosity meter, which uses fork viscosity parameters to determine measured density fork phase instead of a fork density meter live phase, is also disclosed but is treated later with an explanation of analogous behavior.

The anomaly detection module 204 may be configured to use a reference or expected density to determine that a density anomaly has occurred. For instance, the anomaly detection module 204 may receive via the interface circuit 136 and/or store a value of an expected density value. Alternatively, the data processing circuit 132 may have storage with existing density data, the anomaly detection module 204 perhaps being configured to automatically detect the expected density based on measurements and prestored data or by receiving the expected density via a user supplied command specifying the substance or identifier to reference a density in the memory 220 of the data processing circuit 132. If the measured density value differs from the expected density value, the anomaly detection module 204 may determine that a meter is experiencing a density anomaly. The anomaly detection module 204 may determine a density anomaly based on the difference between expected and measured density exceeding a particular threshold.

The anomaly detection module 204 may be configured to determine a density anomaly based on the difference between expected and measured density exceeding a particular threshold below or above an expected density. For instance, if the anomaly detection module 204 determines that a measured density is less than an expected density, perhaps the deficit exceeding a threshold, the anomaly detection module 204 may determine that it is likely there is gas entrainment in the system, a density anomaly indicative of a gas entrainment anomaly. The anomaly detection module 204 may further attempt to determine a corresponding phase anomaly to confirm whether it is likely there is entrained gas in a fluid flow. If the anomaly detection module 204 determines that a measured density is greater than an expected density, perhaps exceeding by a threshold, the anomaly detection module 204 may determine that it is likely there is build-up on an immersed element of the system, perhaps a vibratory element such as a tine 112 or 114, a density anomaly indicative of a build-up anomaly. The anomaly detection module 204 may further attempt to determine a corresponding phase anomaly to confirm whether it is likely there is entrained gas in a fluid flow. If the anomaly detection module 204 determines that a measured density is within a threshold of an expected density, but the anomaly detection module 204 discovers a phase anomaly, the anomaly detection module 204 may determine that the meter was installed or manufactured incorrectly. Density thresholds may be, for instance, 1 kg/m³, .1 kg/m³, .5 kg/m³, 2 kg/m³, 8 kg/m³, 5 kg/m³, 10 kg/m³, 10⁻⁵ g/cm³, or 10⁻⁶ g/cm³. Another density threshold may be the minimal value of density measurement resolution of a meter or any multiple thereof, for instance, 2, 3, 5, 10, 100, 1000, 10000, or 100000 times the resolution. These ranges are intended to be exemplary and may vary from fluid to fluid and meter to meter. For the purposes of all embodiments disclosed in this specification, when numbers representing parameter values are specified, the ranges between all of those numbers as well as ranges above and ranges below those numbers are contemplated and disclosed.

The anomaly detection module 204 may be configured to detect a phase anomaly. A phase anomaly may be characterized by abnormal behavior of a measured phase difference relative to a target phase difference. The target phase difference may also be called an expected phase difference. Certain phase anomalies may be characteristic of specific measured anomalies. For instance, a measured phase difference that displays significant deviation from the target phase difference may indicate that a gas is entrained in the fluid flow measured by the meter. A significant deviation may be, for instance, greater than (or less than if negative) a threshold of .02°, -.02°, .01°, -.01°, .03°, -.03°, 1°, -1°, 5°, 10°, -5°, and -10°. The significant deviation may also be a deviation representing, for instance, greater than (or less than if negative) a threshold of .074%, -.074%, .0148%, -.0148%, .022%, -.022%, .74%, -.74%, -3%, - 3.7%, -6%, -7.4%, 3%, 3.7%, 6%, or 7.4% of the target phase difference.

For the purposes of this specification, a representative trend may be a curve that represents the behavior of a series of datapoints over time or over a number of samples. The representative trend may be determined by taking, for instance, an average, median, average deviation, standard deviation, moving average, and known trend determination methods, of the values of the data points. The number of data points necessary to show a trend largely depends on the fluid to be tested. More viscous fluids can take longer to show flow characteristics than less viscous fluids. Examples of numbers of samples that may be taken to determine trends may include, for instance, 1, 2, 5, 10, 30, 40, 50, 60, 100, 200, 1000, 5000, 10000, or 10000 samples. A corresponding amount of time may be used instead of samples to determine the representative trend with sample rates of, for instance, 1, .1, .2, .3, .4, .5, .6, .7, .8, .9, 2, 3, 4, 5, 10, 20, 50, 100, 1000, 10000, or 100000 samples per second. These examples are not intended to be exhaustive, and standard experimentation with a fluid may be used to determine the number of points or amount of time over which to best characterize a trend to be analyzed. The anomaly detection module 204 may be configured to compute a representative trend.

The anomaly detection module 204 may further detect a density anomaly if the values or a representative trend of measured density vary by greater than a predetermined threshold from a trend of the measured density. For instance, it can be apparent that the measured density is not smooth but has considerable variation relative to a an overall or moving average of density measured. The anomaly detection module 204 may detect the anomaly if there is an instance of deviation that exceeds, for instance, .01%, .05%, .1%, .5%, or 1% of the overall or moving average density value. If measured density data exceeds such thresholds, the anomaly detection module 204 may be configured to determine that a gas entrainment anomaly is likely occurring.

The anomaly detection module 204 may determine a meter is experiencing a phase anomaly indicative of a gas entrainment phase anomaly if values or a representative trend of the measured phase difference undershoots the expected phase difference by a threshold. The threshold for undershooting may be, for instance, an average deviation of live phase relative to expected phase difference of, for instance, .02°, .01°, .015°, .05°, .1°, .134°, .1°, .15°, or .2°, over a period of, for instance, 1 second, 10 seconds, 20 seconds, 30 seconds, a minute, 2 minutes, 5 minutes, or 10 minutes. The threshold for undershooting may represent a difference between the moving average of a live phase measurement and the target phase difference, for instance, a value exceeding .02°, .01°, .015°, .05°, .1°, .134°, .1°, .15°, .2°, .5°, 1°, or 2° over a period of, for instance, 1 second, 5 seconds, 10 seconds, 20 seconds, 30 seconds, a minute, 2 minutes, 5 minutes, or 10 minutes. Moving average deviations may vary more than overall average deviations, as moving averages tend to account for fewer data points (or correspondingly shorter time periods) in order to investigate localized trends. These ranges are intended to be exemplary and non-exhaustive, as characteristics may vary from fluid to fluid and meter to meter.

The anomaly detection module 204 may determine a meter is experiencing a phase anomaly indicative of build-up, such as a film or other deposit, on at least one tine 112 and/or 114 if a representative trend of the measured phase swings above and below the target phase difference, even after sufficient time has passed for the signal to establish a consistent phase difference lock. This may be called a swinging behavior. Phase anomalies due to film and other deposits on tines 112 and/or 114 may be more difficult to detect than gas entrainment anomalies, as the average deviation of the live phase from the target phase is relatively small. The behavior of the live phase measurement trend swinging above and below the target phase difference is one of the obvious signs that there is a deposit on the tines. The magnitude of these swings varies with the fluid that is being measured and the type and extent of the build-up on the tines 112 and/or 114. These swings may have average times where the live phase trend is above and/or below the target phase difference of, for instance, .1 seconds, .5 seconds, 1 second, 5, seconds, 10 seconds, 20 seconds, 50 seconds, 100 seconds, 500 seconds, 1000 seconds, and/or the like. It should be noted that the durations of live phase being above the target phase difference may be different from the durations of the live phase being below the target phase difference. These swings can also be characterized by having a number of entire consecutive oscillation cycles of measured phase difference above the expected phase difference or consecutive oscillation cycles of measured phase difference below the expected phase difference, for instance, 1, 2, 3, 4, 5, 6, 7, 8 ,9, 10, 20, 50, 100, 1000 oscillation cycles, or greater than one of the listed numbers of oscillation cycles or the like. The swings may further be determined by identifying a number of consecutive cycles of measured phase difference above or below the expected phase difference with increasing measured phase difference max cycle deviations from expected phase difference followed by a potentially different number of consecutive measured phase difference cycles with decreasing max cycle deviations from expected phase difference, perhaps followed by the measured phase difference meeting the expected phase difference and crossing over to the other side of the expected phase difference, the numbers of cycles perhaps being any of or more than, for instance, 1, 2, 3, 4, 5, 6, 7, 8 ,9, 10, 20, 50, 100, 1000 oscillation cycles.

The swinging due to build-up may be confused with an installation defect in which one tine is closer to the walls of a containing member than another tine. A way to distinguish between build-up and the incorrect installation is to reset the controller or compel the controller to establish a new lock. Establishing a new lock causes significant oscillation as the controller attempts to force a lock. If the anomaly detection module 204 determines that the swinging behavior continues to swing after the readings are given time to settle, for instance, .1 seconds, .5 seconds, 1 second, 5, seconds, 10 seconds, 20 seconds, 50 seconds, 100 seconds, 500 seconds, 1000 seconds, and/or the like, the anomaly detection module 204 may determine that a phase anomaly indicative of a build-up has occurred. If an anomaly detection module 204 determines that the swinging diminishes to the extent that there is no swinging with time from the time of startup or reestablishing a lock, the anomaly detection module 204 may determine that there is a phase anomaly indicative of an installation anomaly.

Despite the magnitude of the deviation of live phase from target phase difference being less pronounced for a build-up anomaly than a gas entrainment anomaly, the anomaly detection module 204 may detect a phase anomaly corresponding to a build-up anomaly if the deviation exceeds a certain threshold. For instance, if the anomaly detection module 204 determines that a density anomaly indicating build-up exists, the anomaly detection module 204 may seek deviations that are relatively small but significant enough to be beyond deviations that would exist in the same meter in the same fluid when the meter was first introduced and allowed to phase lock. The threshold for deviation may be, for example, .01°, .015°, .02°, .021°, .022°, .023°, .025°, or .026°.

The anomaly detection module 204 may also detect a phase anomaly indicating a build-up anomaly if the live phase and/or a trend of the live phase displays a triangular pattern, hereinafter designated, "triangulation," especially when the meter system resets and/or attempts to generate a lock. If an anomaly detection module determines that a density anomaly determination is made that indicates that there may be a buildup anomaly, the meter system may restart or may attempt to establish a new lock. This triangulation behavior is exaggerated when trying to lock onto the phase difference if there is build-up on vibratory elements of the meter, such as on the at least one tine 112 and/or 114. This triangulation is easy to distinguish from basic peaks and troughs of oscillation due to the phase locking because a large portion of the overall oscillatory pattern exceeds or is less than the target phase difference, showing a triangular shape. Also, the anomaly detection module may be configured to deploy machine learning algorithms, for instance, convolutional networks, regression, long short-term memory (LSTM), autoregressive integrated moving average, or other machine learning algorithms to determine that a triangulation is detected. Also, triangulation may be determined by the measured phase, for a certain number of consecutive oscillation cycles, exceeding or being less than the target phase difference, as is disclosed with respect to the swings in phase. In various fluid flows and meters, the pattern may be more circular than triangular. Triangulation may further be identified by a number of consecutive oscillations forming a triangular or circular shape relative to the target phase difference. Examples of the numbers of consecutive oscillation cycles that may be used in this determination may be the same as with those disclosed for the determination of swinging behavior.

The gas entrainment and build-up anomalies may be confused with other anomalies. For instance, the gas entrainment anomaly could show similar phase and density anomalies to an erosion of the tines 112 and 114 or other elements that may be immersed in the fluid flow. The anomaly detection module 204 may, after determining one or both of a density anomaly and/or a phase anomaly indicative of gas entrainment try to identify which anomaly is occurring. For instance, the anomaly detection module 204 may request or have stored data representing an indication that the substance being processed is likely to contain particles that would erode immersed elements. If so, the anomaly detection module 204 may indicate one or both of an erosion anomaly and an air entrainment anomaly. This may require physical inspection to determine and identify the anomaly. If the anomaly detection module 204 does not have data to show the flow is likely to erode the immersed elements, the anomaly detection module 204 may identify an air entrainment anomaly, perhaps with more confidence.

The build-up anomaly may be confused with a corrosion anomaly. When immersed elements corrode, a foreign layer of buildup corresponding to a chemical product of the fluid and immersed elements may deposit. The anomaly detection module 204 may, after determining one or both of a density anomaly and/or a phase anomaly indicative of build-up, try to identify which anomaly is occurring. For instance, the anomaly detection module 204 may request or have stored data representing an indication that the substance being processed is likely to be corrosive and corrode immersed elements. If so, the anomaly detection module 204 may indicate one or both of a corrosion anomaly and a buildup anomaly.

The anomaly detection module 204 may determine that more data is necessary to distinguish between a build-up anomaly and a corrosion anomaly. For instance, the anomaly detection module 204 may transmit data suggesting to a user or commanding a flow fluid control to increase the velocity of the fluid flow. Increasing fluid flow has been shown to remove certain film elements and restore nominal functionality. After flow is increased, the anomaly detection module 204 may continue to operate or may reset and may take fresh measurements. If the anomalies are eliminated, the anomaly detection module 204 may indicate and/or log that there was a build-up anomaly and/or may record a time of the anomaly. If the anomaly detection module 204 was responsible for commanding the fluid control to increase fluid velocity, the anomaly detection module may command the fluid control to decrease fluid flow velocity in response to a detection that an anomaly has been resolved. If the anomaly detection module 204 detects that an anomaly has been resolved, the anomaly detection module may notify a user and/or log that the anomaly has been resolved, perhaps with a time stamp. These notification and command operations may also be conducted by the response module 206 independently or in concert with the anomaly detection module 204.

The flow fluid may have the potential to deposit a build-up substance with a melting point lower than the immersed elements of the meter. For instance, in gas and oil applications, it is common to have paraffin or other wax deposit on the elements immersed in fluid flow. The anomaly detection module 204 or the data processing circuit 132 may store data representing whether a fluid in a fluid flow deposits material that has a melting point lower than the melting point of the immersed elements of the meter. The anomaly detection module 204, after determining and identifying at least one anomaly indicative of a build-up anomaly, may determine that build-up may be melted, based on data stored and/or provided by a user that indicate the solid deposited on the immersed elements has a melting point lower than that of the immersed elements. The anomaly detection module 204 may, in isolation or in concert with a response module 206, notify a user to increase the temperature of a fluid flow above the melting point of the solid expected to be deposited on the immersed elements or may command a fluid and temperature control to increase the temperature of the fluid in the fluid flow. If the live phase and density measurements return to levels that do not indicate anomalies, the anomaly detection module 204 may determine that the immersed elements of the meter had a build-up of a substance that can be melted, for instance, the paraffin or other wax in a natural gas or oil fluid. The anomaly detection module 204 may, independently or in concert with a response module 206, notify a user of whether the anomaly was resolved and/or record an anomaly identification (perhaps with a timestamp). If the heating does not resolve the issue, the meter may need to be inspected, and the anomaly detection module 204 may transmit a notification to a user or user system that the meter needs inspection.

The anomaly detection module 204 may compare the density and live phase measurements, trends, and/or deviations with historical readings to determine anomalies instead of or in addition to comparing the density and live phase measurements, trends, and/or deviations with current live phase and/or density measurements or factory set expected values. The data processing circuit 132 may store historical data from a first or earlier use of the meter in a particular fluid and determine that the live phase measurements deviate from the expected phase difference in a manner that is different from the deviation initially displayed when the meter was first used in the fluid. The data processing circuit 132 may store such parameters and deviations from a first use of the meter in the particular flow fluid in order to establish ideal conditions and thresholds by which to compare the present density and/or live phase measurements and the relative behavior of the density and/or phase measurements with respect to the historically stored behaviors. For instance, the anomaly detection module 204 may be activated when the meter is first introduced to a fluid. The data processing circuit 132 may start recording and storing data representing density measurements and live phase data. The anomaly detection module 204 may use the stored data to determine thresholds for normal behavior, for instance, by monitoring over a significant period of time. This period of time may be, for instance, a second, a minute, ten minutes, an hour, a day, a week, a month, or a year. The data processing circuit 132 may further store this data from the time of startup until a current time, and the anomaly detection module 204 may monitor for changes in the behavior of the metrics described to determine anomalous readings in live phase and density measurements to determine and identify anomalies. The thresholds may represent the maximum or minimum deviations from the density, phase difference of frequency measurements in the historical data or percentages thereof, for instance, 140%, 200%, 40%, 50%, 60%, 70%, 80%, 90%, 100%, 150%, 300%, 400%, 500%, 600%, 700%, 800%, 900%, 1000%, or the like. Different percentages may be used for different metrics. For instance, a first percentage of a historical datapoint or trend could be used to determine a threshold for a density anomaly, while a second percentage of another historical datapoint or trend could be used to determine a threshold for a phase anomaly indicative of an erosion anomaly. All combinations of thresholds, percentages of historical data, and associated anomalies are contemplated. The anomaly detection module 204 may also deploy machine learning techniques to determine established normal behavior or expected anomalies. For instance, an anomaly detection module 204 may be trained on phase difference data to distinguish between regular oscillations and swings or triangulation. In order to facilitate this, the anomaly detection module 204 may be provided data representing and labeled as normal flow and data representing and labeled as abnormal flow and will detect characteristics and trends. Examples of this may include determining abnormal phase difference swinging around expected values, or the triangulation behavior. The anomaly detection module 204 may also use machine learning algorithms to determine thresholds by being fed data labeled as normal flow data and data labeled as abnormal flow data, perhaps representing and labeled as indicative of any of the anomalies described in this specification. The anomaly detection module 204 may also store pretrained models or may store pretrained models that can be modified dynamically with respect to particular fluid flows by the anomaly detection module or an external logic circuit communicatively coupled to the anomaly detection module 204.

Phase anomalies indicative of gas entrainment and build-up may be distinguished from one another by looking at two different thresholds for live phase. For instance, the threshold for the difference between live phase and target phase difference to determine a build-up anomaly may be less than that of a gas entrainment anomaly. If the difference between live phase and target phase exceeds the threshold for a build-up anomaly identification but is less than the threshold for a gas entrainment anomaly, the anomaly detection module 204 may identify a phase anomaly indicative of a build-up anomaly. If the difference between live phase and target phase exceeds the thresholds for both a build-up anomaly and a gas entrainment anomaly, the anomaly detection module 204 may identify a phase anomaly indicative of a gas entrainment anomaly.

If the meter in question is a fork viscosity meter (as opposed to a fork density meter), the phase differences may be characterized as fork phase differences. Fork viscometers use fork frequencies to determine the density of a fluid. Fork viscosity measurements oscillate, typically between a low and high frequency around a resonance frequency, however, the fork phase representing the density measurements is identical to the live phase in a fork density meter. Despite the fork densitometer using fork phase instead of the live phase, the trends mentioned to detect anomalies may apply to the phase difference measurements in fork densitometers identically to the measured density fork phase readings of a fork viscometer. Therefore, in any element of this description in which a comparison between a measured phase difference and a target phase difference (or the various variations of the synonyms for phase difference as mentioned above) is mentioned with respect to detecting and identifying anomalies (for a fork density meter), the same may apply to a comparison of the fork phase difference measurement relative to the expected fork phase difference of a fork viscosity meter.

An example of a disclosed fork density meter anomaly being analogous to a fork viscosity meter anomaly may be demonstrated by the determination of a phase anomaly indicative of an air entrainment. In a fork density meter, a phase anomaly indicative of an air entrainment anomaly may be determined if the difference between a measured phase difference and an expected phase difference exceeds a threshold. The fork viscosity meter may, analogously, detect a phase anomaly indicative of an air entrainment anomaly if the difference between a fork phase difference (or trend) exceeds an expected fork phase difference (or trend) by a threshold. Whether specified or not, if a phase difference is mentioned in the specification, embodiments in which the measured or expected phase difference or phase difference trend apply to a fork density meter should also be construed to contemplate an analogous measured or expected fork phase difference or fork phase difference trend in a fork viscosity meter. Similarly, any mention of a phase anomaly may be construed to apply to a fork viscosity meter and its fork phase difference measurements, and all analogous cases with respect to a measured phase difference (and synonyms) for a phase anomaly in a fork viscosity meter are contemplated by the specification.

The anomaly detection module 204 may determine there is a phase anomaly but no corresponding density anomaly. For instance, the anomaly detection module may identify a phase anomaly indicative of a gas entrainment anomaly but no corresponding density anomaly indicative of a gas entrainment anomaly. This phase anomaly may be indicative of a manufacturing defect or installation issue. The anomaly detection module may interpret a phase anomaly without a corresponding density anomaly as a manufacturing or installment issue and may notify the user or user system of the problem and/or may instruct the user to inspect the meter.

If an anomaly detection module 204 identifies any anomaly or more than one anomaly that is indicative of a gas entrainment anomaly, the anomaly detection module may determine that a fluid has entrained gas. If an anomaly detection module 204 identifies any anomaly or more than one anomaly that is indicative of a build-up anomaly, the anomaly detection module 204 may determine that there is build-up on an immersed element of the meter. If an anomaly detection module 204 identifies any anomaly or more than one anomaly that is indicative of a corrosion anomaly, the anomaly detection module may determine that an immersed element of the meter has eroded. If an anomaly detection module 204 identifies any anomaly or more than one anomaly that is indicative of a corrosion anomaly, the anomaly detection module may determine that an immersed element of the meter has corroded. If an anomaly detection module 204 identifies any anomaly or more than one anomaly that is indicative of an installation anomaly, the anomaly detection module may determine that meter has been installed incorrectly. If an anomaly detection module 204 identifies any anomaly or more than one anomaly that is indicative of a manufacturing anomaly, the anomaly detection module may determine that meter has been manufactured incorrectly.

All different embodiments of the combinations and orders in which detections and identification are conducted by the anomaly detection module are contemplated herein. For instance, the anomaly detection module 204 may consistently monitor for both density and phase anomalies. The anomaly detection may entail first determining and identifying a density anomaly consistently as a precursor to determining and identifying a phase anomaly. The anomaly detection may entail first determining and identifying a phase anomaly consistently as a precursor to determining and identifying a density anomaly. Alternatively or additionally, a user could initiate density and/or phase anomaly detection in any order the user desires. The anomaly detection module 204 could be preset to detect different types of anomalies at particular time intervals or in response to changing a fluid in a fluid flow, initiated either by automated detection protocols or user instruction. The system may deploy particular anomalies indicated by other anomalies in any combination or order, and may do so in an automated fashion, in response to other anomalies, and/or in response to user instructions.

Because the anomaly detection module 204 may be used when the meter is operating, anomalies may be detected while the meter is, for example, in operation or installed or the anomalies may be detected without removing the meter from operating conditions.

The response module 206 is a module that responds to detections and identifications of anomalies. The response module 206 may transmit notifications to a user, the storage of the data processing circuit 132, or to another device regarding determined and/or identified anomalies. The notification may be by an LED indicator on the meter or may be displayed on a display on the meter, or may transmit notifications to other external devices, perhaps including displays or historical data logs. Examples of notifications may include displays, alerts, a digitally communicated alert, sending of a discrete output, for instance over ProLink, or the notifications may only be transmitted in response to a user inquiry. The notifications may themselves have specified tolerances for when a user or system should receive a notification.

The response module 206 may transmit specific notifications related to particular anomalies. The response module 206 may transmit notifications regarding, for instance, one, any combination, or all of a gas entrainment anomaly, a build-up anomaly, a corrosion anomaly, an erosion anomaly, an installation anomaly, or a manufacturing anomaly. In an embodiment, these may be indicated by a "yes" or a "no" (or a 1 or 0) in response to a given alert. The specific anomalies that indicate other anomalies may be transmitted as well, for instance, anomalies that are indicative of other anomalies or anomalies that indicate other anomalies.

The response module 206 may take actions in response to determinations of anomalies by the anomaly detection module 204. For instance, in response to a determination that a build-up anomaly may exist, the response module 206 may increase fluid flow velocity and/or increase the temperature of the fluid flow to dry and eliminate any build-up on an immersed element of a meter. The response module 206 may initiate a cleaning or flushing sequence in a flow control system in response to a determination of an anomaly. The response module 206 may open a valve in a fluid flow system in response to a detection of an anomaly. Any responsive actions that have been described as being taken by the anomaly detection module 204 including, for instance, logging, recording, time-stamping, transmitting, or changing fluid flow characteristics by command, may be conducted by the response module 206 in isolation or in cooperation with the anomaly detection module 204.

In an embodiment, the anomaly detection module 204 may determine there is an anomaly that the detection module cannot identify. In a situation where it is determined that an anomaly exists but it is not indicative of an anomaly the anomaly detection module 204 is configured to identify or is indicative of more than one anomaly (perhaps at least one of the more than one anomaly and another of the more than one anomaly being inconsistent), the response module 206 may transmit a notification that a generic but unidentified anomaly has been detected, may transmit a notification that the meter should be inspected, and/or may transmit commands for a flow system to shut down to allow for inspection of the element.

The input/output 230 is a device used to communicatively couple the data processing circuit 132 to external computing elements. The input/output 230 is capable of connecting the data processing circuit 132 to external elements, using known technologies, for instance, universal serial bus, ProLink, serial communication, serial advanced technology attachments, meter electronics 20 communication elements, and/or the like. The input/output 230 may have a communicative coupler 240. The communicative coupler 240 is used to couple the data processing circuit with components external of the data processing circuit 132, for instance, the meter, the sensor 5, the meter electronics 20, an external computing device, display, server, indicator(s) and/or the like.

### Flowcharts

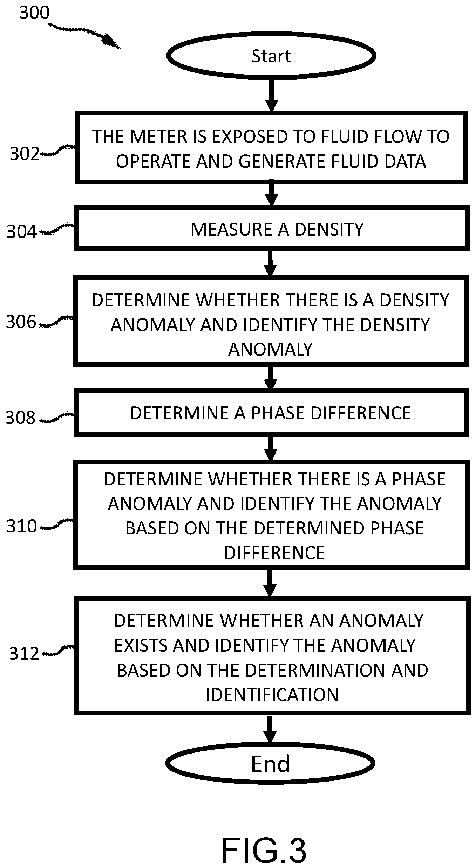

FIGs. 3-10 show flowcharts of embodiments of methods for determining, identifying and/or responding to anomalous behavior in meters. The methods disclosed in the flowcharts are non-exhaustive and merely demonstrate potential embodiments of steps and orders. The methods must be construed in the context of the entire specification, including elements disclosed in descriptions of FIGs. 1-2, the meter disclosed in FIGs. 1-2, and/or the data processing circuit 132.

FIG. 3 shows a flowchart of an embodiment of a method 300 for determining and identifying an anomaly. The meter referred to in method 300 may be the meter with sensor 5 as disclosed in FIGS. 1-2, although any suitable meter may be employed in alternative embodiments. All methods for accomplishing these steps disclosed in this specification are contemplated, including all of the capabilities of the data processing circuit 132 and its modules.

In step 302, the meter is exposed to fluid flow to operate and generate fluid data.

In step 304, the fluid characteristic module 202 determines a density of the fluid in the fluid flow.

In step 306, the anomaly detection module 204 determines whether there is a density anomaly and identifies the density anomaly based on a comparison of the determined density and an expected density. Any methods for detecting a density anomaly disclosed in this specification and/or with respect to the anomaly detection module 204 may be employed to detect the density anomaly.

In step 308, the fluid characteristic module 202 determines a phase difference.

In step 310, the anomaly detection module 204 determines whether there is a phase anomaly and identifies the phase anomaly based on the determined phase difference. Any methods for detecting a phase anomaly disclosed in this specification and/or with respect to the anomaly detection module 204 may be employed to detect the phase anomaly.

In step 312, the anomaly detection module 204 determines whether an anomaly exists and identifies the anomaly based on the determination and identification of a density anomaly and/or the determination and identification of a phase anomaly. Step 312 may use any method that accounts for determinations and identifications to make a determination and identification of an anomaly. All combinations of determinations and identifications are contemplated by this specification.

In an embodiment, each of the steps of the method shown in FIG. 3 is a distinct step. In another embodiment, although depicted as distinct steps in FIG. 3, steps 302-312 may not be distinct steps. In other embodiments, the method shown in FIG. 3 may not have all of the above steps and/or may have other steps in addition to or instead of those listed above. The steps of the method shown in FIG. 3 may be performed in another order. Subsets of the steps listed above as part of the method shown in FIG. 3 may be used to form their own method. The steps of method 300 may be repeated in any combination and order any number of times, for instance, continuously looping in order to maintain surveillance.

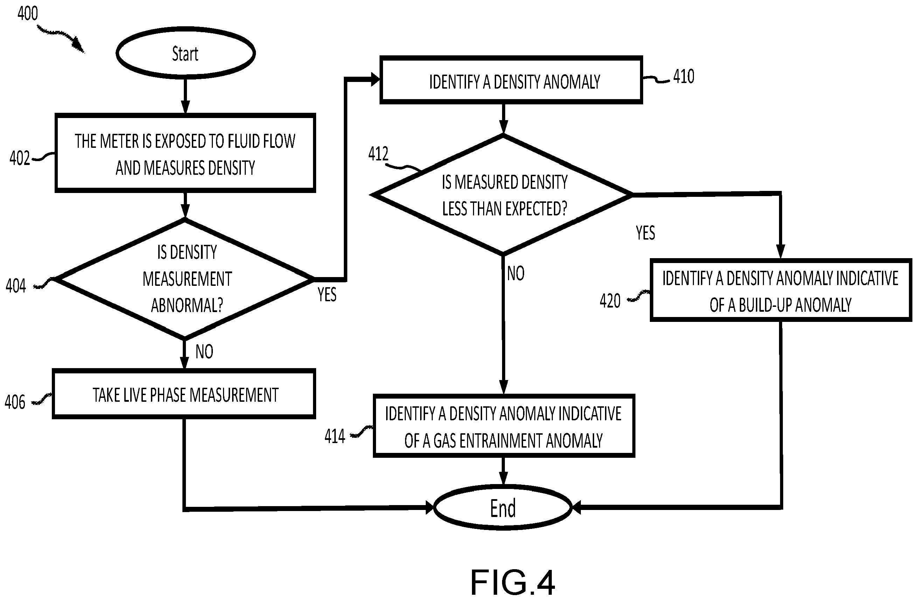

**FIG.** 4 shows a flowchart of an embodiment of a method 400 for determining and identifying a density anomaly. The meter referred to in method 400 may be the meter with sensor 5 as disclosed in FIGS. 1-2, although any suitable meter may be employed in alternative embodiments. All methods for accomplishing these steps disclosed in this specification are contemplated, including all of the capabilities of the data processing circuit 132 and its modules.

In step 402, the meter is exposed to fluid flow to operate and generate fluid data. A fluid characteristic module 202 records data, at least including data representing a density measurement.

In step 404, a decision is made as to whether the difference between the density measurement and an expected density is abnormal and represents a density anomaly. The anomaly detection module 204 may be configured to determine a density anomaly based on the difference between expected and measured density exceeding a particular threshold below or above an expected density. For instance, if the anomaly detection module 204 determines that a measured density is less than an expected density, perhaps the deficit exceeding a threshold, the anomaly detection module 204 may determine that it is likely there is gas entrainment in the system. Any methods described in this specification for determining whether a density anomaly is occurring may be used in this step, including various thresholds, methods for generating thresholds, and comparisons with historical data. If it is determined in step 404 that there is a density anomaly, the method continues at step 410. If it is determined in step 404 that there is no density anomaly, the method continues at step 406.

In step 406, a live phase measurement is taken. The live phase measurement is taken to determine whether another anomaly, such as an installation or manufacturing anomaly is causing irregularities in phase measurements according to the embodiments disclosed in the specification. Step 406 is not a necessary element but may be useful if the phase measurement is anomalous, despite the lack of a density anomaly. Step 406 continues to the end of the method.

In step 410, the anomaly detection module 204 identifies a density anomaly.

In step 412, a decision is made as to whether the measured density is below an expected density. The anomaly detection module 204 may determine whether a measured density is below an expected density. In an embodiment, the anomaly detection module 204 may be configured to have different thresholds for densities below and/or above the expected density, the thresholds indicative of different phenomena. If the anomaly detection module 204 determines that the measured density is below the expected density, perhaps deviating by more than a threshold, the method continues at step 414. If the anomaly detection module 204 determines that the measured density is greater than an expected density, perhaps deviating by more than a threshold, the method continues at step 420.

In step 414, the anomaly detection module 204 determines and identifies a density anomaly indicative of a gas entrainment anomaly.

In step 420, the anomaly detection module 204 determines and identifies a density anomaly indicative of a build-up anomaly.

In an embodiment, each of the steps of the method shown in FIG. 4 is a distinct step. In another embodiment, although depicted as distinct steps in FIG. 4, steps 402-420 may not be distinct steps. In other embodiments, the method shown in FIG. 4 may not have all of the above steps and/or may have other steps in addition to or instead of those listed above. The steps of the method shown in FIG. 4 may be performed in another order. Subsets of the steps listed above as part of the method shown in FIG. 4 may be used to form their own method. The steps of method 400 may be repeated in any combination and order any number of times, for instance, continuously looping in order to maintain surveillance.

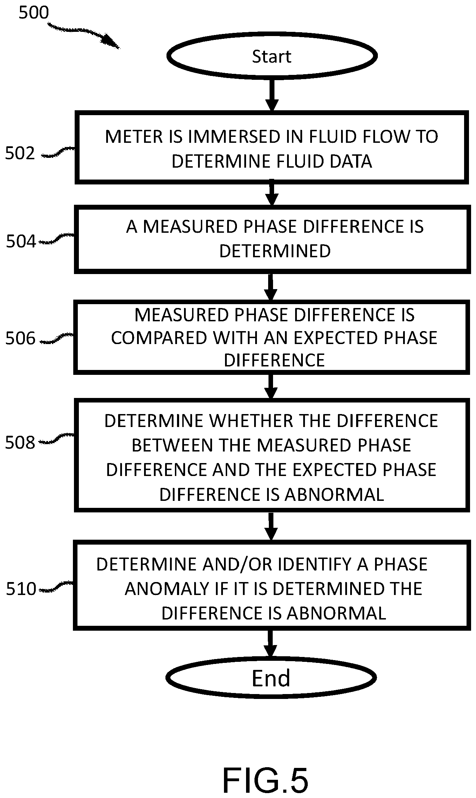

FIG. 5 shows a flowchart of an embodiment of a method 500 for determining a phase anomaly. The meter referred to in method 500 may be the meter with sensor 5 as disclosed in FIGS. 1-2, although any suitable meter may be employed in alternative embodiments. All methods for accomplishing these steps disclosed in this specification are contemplated, including all of the capabilities of the data processing circuit 132 and its modules.

In step 502, a meter is immersed in fluid flow to determine fluid data.

In step 504, a measured phase difference is determined by a fluid characteristic module 202.

In step 506, the measured phase difference is compared with an expected phase difference.

In step 508, an anomaly detection module 204 determines whether the difference between the measured phase difference and the expected phase difference is abnormal. A difference between a measured phase difference and an expected phase difference may be abnormal if a phase anomaly is detected by the anomaly detection module 204. All methods for detecting a phase anomaly disclosed in this specification are considered.

In step 510, the anomaly detection module determines and/or identifies a phase anomaly if the anomaly detection module 204 determines the difference is abnormal.

In an embodiment, each of the steps of the method shown in FIG. 5 is a distinct step. In another embodiment, although depicted as distinct steps in FIG. 5, steps 502-510 may not be distinct steps. In other embodiments, the method shown in FIG. 5 may not have all of the above steps and/or may have other steps in addition to or instead of those listed above. The steps of the method shown in FIG. 5 may be performed in another order. Subsets of the steps listed above as part of the method shown in FIG. 5 may be used to form their own method. The steps of method 500 may be repeated in any combination and order any number of times, for instance, continuously looping in order to maintain surveillance.

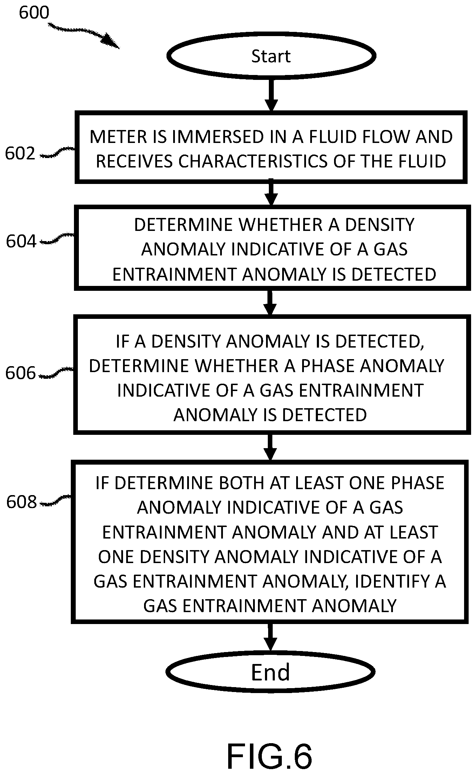

**FIG. 6** shows a flowchart of an embodiment of a method 600 for determining whether there is entrained gas in a system. The meter referred to in method 600 may be the meter with sensor 5 as disclosed in FIGS. 1-2, although any suitable meter may be employed in alternative embodiments. All methods for accomplishing these steps disclosed in this specification are contemplated, including all of the capabilities of the data processing circuit 132 and its modules.

In step 602, a fork density or viscosity meter is immersed in a fluid flow and receives data representing physical characteristics of the fluid in the fluid flow, including a phase difference measurement, and the meter, perhaps using a fluid characteristic module 202, determines a density and a measured phase difference.

In step 604, the fork density or viscosity meter determines, using an anomaly detection module 204, whether a density anomaly indicative of a gas entrainment anomaly is detected. All methods disclosed in this specification are contemplated for detecting the gas entrainment anomaly.

In step 606, if a density anomaly is detected in step 604, the fork density or viscosity meter, using the anomaly detection module 204, determines whether a phase anomaly indicative of a gas entrainment anomaly is detected. All methods disclosed in this specification are contemplated for detecting the gas entrainment anomaly.

In step 608, if the fork density or viscosity meter determines both at least one phase anomaly indicative of a gas entrainment and at least one density anomaly indicative of a gas entrainment, the anomaly detection module 204 determines and/or identifies a gas entrainment anomaly.

In an embodiment, each of the steps of the method shown in FIG. 6 is a distinct step. In another embodiment, although depicted as distinct steps in FIG. 6, steps 602-608 may not be distinct steps. In other embodiments, the method shown in FIG. 6 may not have all of the above steps and/or may have other steps in addition to or instead of those listed above. The steps of the method shown in FIG. 6 may be performed in another order. Subsets of the steps listed above as part of the method shown in FIG. 6 may be used to form their own method. The steps of method 600 may be repeated in any combination and order any number of times, for instance, continuously looping in order to maintain surveillance.

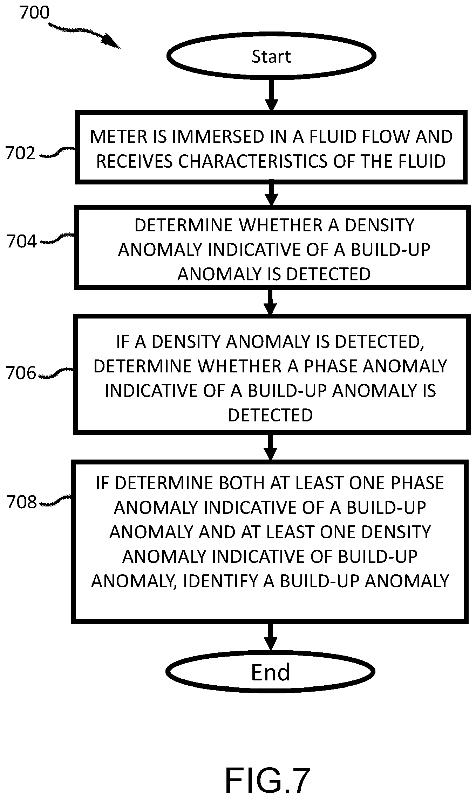

**FIG. 7** shows a flowchart of an embodiment of a method 700 for determining whether there is build-up on a meter. The meter referred to in method 700 may be the meter with sensor 5 as disclosed in FIGS. 1-2, although any suitable meter may be employed in alternative embodiments. All methods for accomplishing these steps disclosed in this specification are contemplated, including all of the capabilities of the data processing circuit 132 and its modules.

In step 702, a meter is immersed in a fluid flow and receives data representing physical characteristics of the fluid in the fluid flow, including a phase difference measurement, and the meter, using a fluid characteristic module 202, determines a density and a measured phase difference.

In step 704, the meter, using an anomaly detection module 204, determines whether a density anomaly indicative of a build-up anomaly is detected. All methods disclosed in this specification are contemplated for detecting the density anomaly indicative of a build-up anomaly.

In step 706, if a density anomaly indicative of a build-up anomaly is detected, the anomaly detection module 204 determines whether a phase anomaly indicative of a build-up anomaly is detected. All methods disclosed in this specification are contemplated for detecting the phase anomaly indicative of a build-up anomaly.

In step 708, if the fork density meter determines both at least one phase anomaly indicative of a build-up anomaly and at least one density anomaly indicative of a build-up anomaly, the anomaly detection module 204 determines and/or identifies a gas entrainment anomaly.

In an embodiment, each of the steps of the method shown in FIG. 7 is a distinct step. In another embodiment, although depicted as distinct steps in FIG. 7, steps 702-708 may not be distinct steps. In other embodiments, the method shown in FIG. 7 may not have all of the above steps and/or may have other steps in addition to or instead of those listed above. The steps of the method shown in FIG. 7 may be performed in another order. Subsets of the steps listed above as part of the method shown in FIG. 7 may be used to form their own method. The steps of method 700 may be repeated in any combination and order any number of times, for instance, continuously looping in order to maintain surveillance.

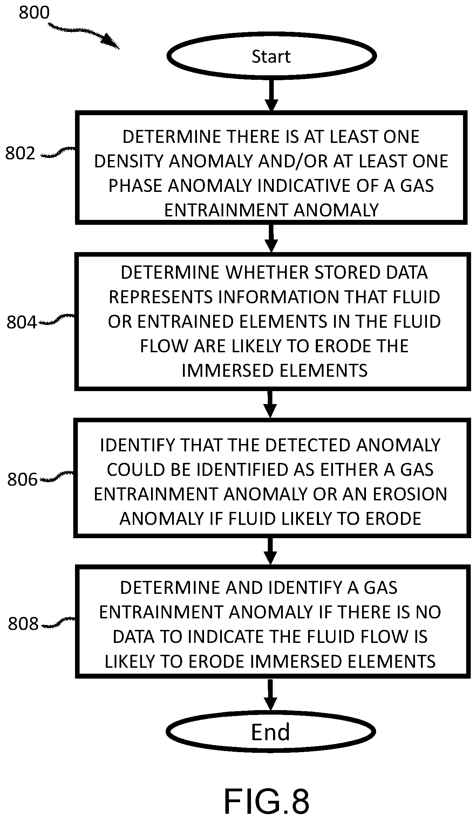

**FIG. 8** shows a flowchart of an embodiment of a method 800 for determining whether a gas entrainment anomaly is being confused with an erosion anomaly. The meter referred to in method 800 may be the meter with sensor 5 as disclosed in FIGS. 1-2, although any suitable meter may be employed in alternative embodiments. All methods for accomplishing these steps disclosed in this specification are contemplated, including all of the capabilities of the data processing circuit 132 and its modules.

In step 802, an anomaly detection module 204 of the meter determines and identifies there is at least one density anomaly and/or at least one phase anomaly indicative of a gas entrainment anomaly. The determination and identification of the anomalies may be conducted by any of the appropriate anomaly detection methods disclosed.

In step 804, the anomaly detection module 204 determines whether a data processing circuit 132 has stored data representing information that the fluid or entrained elements in the fluid flow are likely to erode the immersed elements of the meter.

In step 806, the anomaly detection module 204 determines that the detected anomaly could be identified as either a gas entrainment anomaly or an erosion anomaly if there is data indicating that the fluid is likely to erode immersed elements. In response, a response module 206 could indicate both and/or indicate that an inspection is necessary to determine and identify the specific anomaly.

In step 808, the anomaly detection module 204 determines and identifies a gas entrainment anomaly, perhaps with greater confidence, if there is no data to indicate the fluid flow is likely to erode immersed elements.

In an embodiment, each of the steps of the method shown in FIG. 8 is a distinct step. In another embodiment, although depicted as distinct steps in FIG. 8, steps 802-808 may not be distinct steps. In other embodiments, the method shown in FIG. 8 may not have all of the above steps and/or may have other steps in addition to or instead of those listed above. The steps of the method shown in FIG. 8 may be performed in another order. Subsets of the steps listed above as part of the method shown in FIG. 8 may be used to form their own method. The steps of method 800 may be repeated in any combination and order any number of times, for instance, continuously looping in order to maintain surveillance.

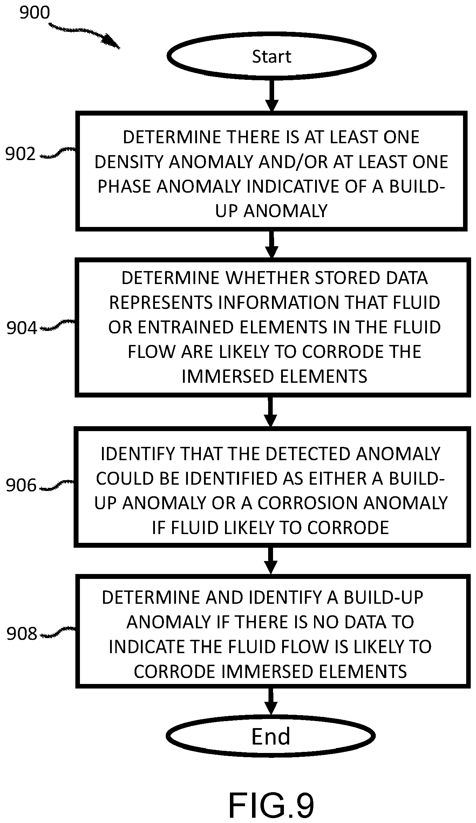

**FIG. 9** shows a flowchart of an embodiment of a method 900 for determining whether a build-up anomaly is being confused with a corrosion anomaly. The meter referred to in method 900 may be the meter with sensor 5 as disclosed in FIGS. 1-2, although any suitable meter may be employed in alternative embodiments. All methods for accomplishing these steps disclosed in this specification are contemplated, including all of the capabilities of the data processing circuit 132 and its modules.

In step 902, an anomaly detection module 204 of the meter determines and identifies there is at least one density anomaly and/or at least one phase anomaly indicative of a build-up anomaly. The determination and identification of the build-up anomalies may be conducted by any of the appropriate anomaly detection methods disclosed.

In step 904 the anomaly detection module 204 determines whether a data processing circuit 132 has stored data representing information that the fluid or entrained elements in the fluid flow are likely to corrode the immersed elements of the meter.

In step 906, the anomaly detection module 204 determines that the detected anomaly could be identified as either a build-up or a corrosion anomaly if the data processing circuit 132 has data representing that the flow fluid is corrosive. In response, a response module 206 could indicate both anomalies and/or indicate that an inspection is necessary to determine and identify the specific anomaly.

In step 908, the anomaly detection module 204 determines and identifies a buildup anomaly if the data processing circuit 132 does not have data representing that the fluid is corrosive.

In an embodiment, each of the steps of the method shown in FIG. 9 is a distinct step. In another embodiment, although depicted as distinct steps in FIG. 9, steps 902-908 may not be distinct steps. In other embodiments, the method shown in FIG. 9 may not have all of the above steps and/or may have other steps in addition to or instead of those listed above. The steps of the method shown in FIG. 9 may be performed in another order. Subsets of the steps listed above as part of the method shown in FIG. 9 may be used to form their own method. The steps of method 900 may be repeated in any combination and order any number of times, for instance, continuously looping in order to maintain surveillance.

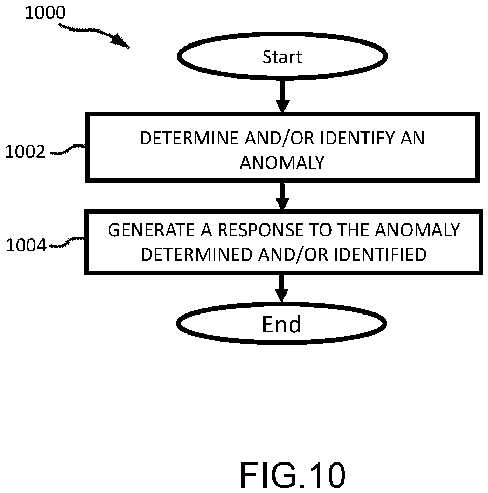

**FIG. 10** shows a flowchart of an embodiment of a method 1000 for responding to an anomaly detection. The meter referred to in method 1000 may be the meter with sensor 5 as disclosed in FIGS. 1-2, although any suitable meter may be employed in alternative embodiments. All methods for accomplishing these steps disclosed in this specification are contemplated, including all of the capabilities of the data processing circuit 132 and its modules.

In step 1002, an anomaly detection module 204 of the meter determines and/or identifies an anomaly. The determination and identification of the anomaly may be by any of the methods described in this specification.

In step 1004, a response module 206 generates a response to the anomaly determined and/or identified by the anomaly detection module 204. The response may be an indication or display or may be an automated command response to affect a system and/or the fluid or fluid flow being measured. All responses disclosed in this specification are contemplated, and all appropriate responses to determinations and/or identifications are also contemplated.

In an embodiment, each of the steps of the method shown in FIG. 10 is a distinct step. In another embodiment, although depicted as distinct steps in FIG. 10, steps 1002-1004 may not be distinct steps. In other embodiments, the method shown in FIG. 10 may not have all of the above steps and/or may have other steps in addition to or instead of those listed above. The steps of the method shown in FIG. 10 may be performed in another order. Subsets of the steps listed above as part of the method shown in FIG. 10 may be used to form their own method. The steps of method 1000 may be repeated in any combination and order any number of times, for instance, continuously looping in order to maintain surveillance.

### Graphs

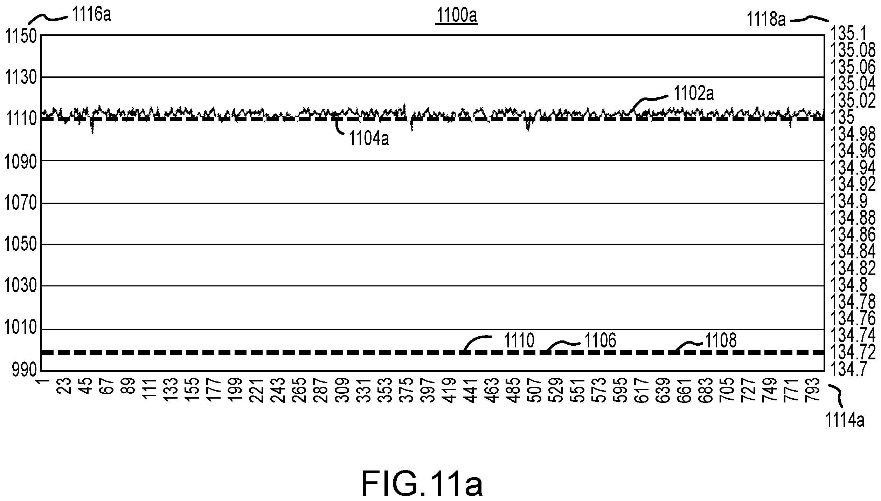

FIGs. 11a-14 show graphs explaining the anomalies described in the specification. These graphs demonstrate the differences between normal an anomalous behavior in meters.

**FIG. 11a** shows a two-axis graph 1100a comparing live phase and density measurements to expected values with respect to time when a fork density meter is operating without an anomaly, according to an embodiment. Graph 1100a has a live phase measurement 1102a, a target phase difference 1104a, a measured density 1106, an expected density 1108, a density deviation 1110, a phase deviation 1112a, an abscissa 1114a representing a sample number, a left ordinate 1116a representing density in kg/m³, and a right ordinate 1118a representing phase difference in degrees. It can be seen that the phase deviation is relatively small and the live phase and measured density generally track expected values.

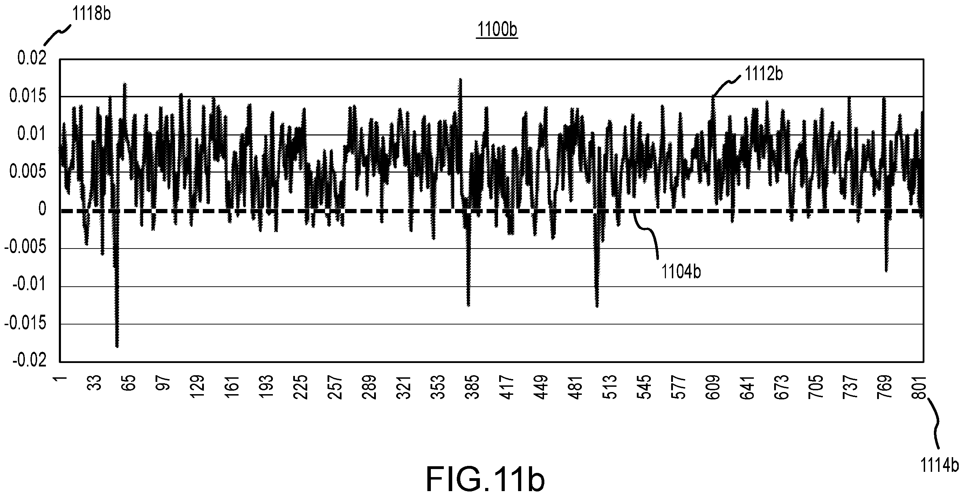

**FIG. 11b** shows a graph 1100b of deviation of live phase from expected phase difference when a fork density meter is operating without an anomaly, according to an embodiment. The graph 1100b has a target phase difference reference 1104b, a measured phase deviation 1112b, abscissa 1114b representing a sample number, and an ordinate 1118b representing phase difference deviation from expected in degrees. The average phase deviation 1112b in this embodiment is .006125°, and the values do not exceed .02°. The moving average of phase deviation 1112a is between 0.005° and .0125°.

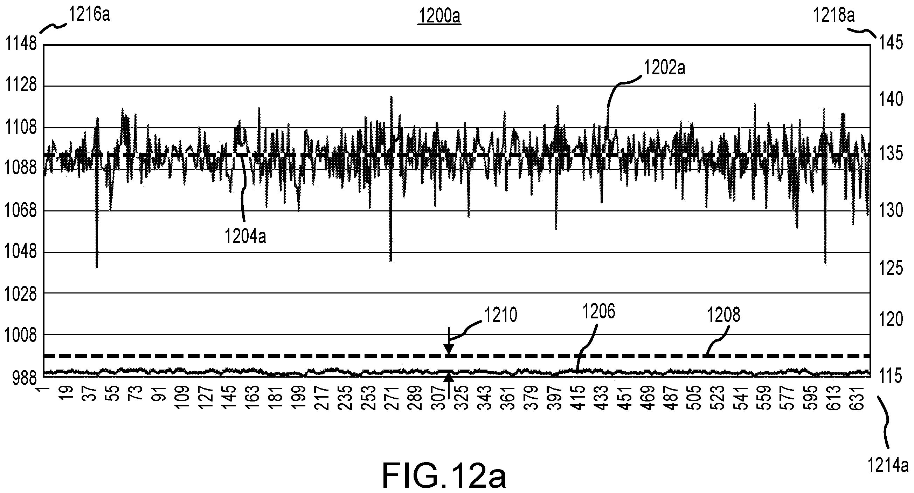

**FIG. 12a** shows a two-axis graph 1200a comparing live phase and density measurements to expected values with respect to time when a fork density meter is operating with an entrained gas anomaly, according to an embodiment. Graph 1200a has a live phase measurement 1202a, a target phase difference 1204a, a measured density 1206, an expected density 1208, a density deviation 1210, a phase deviation 1212a, an abscissa 1214a representing a sample number, a left ordinate 1216a representing density in kg/m³, and a right ordinate 1218a representing phase difference in degrees. The density deviation 1210 is about 8kg/m³ with the measured density 1206 lower than the expected density 1208. Significant variation in the measured density 1206 can be shown. Also, the phase deviation 1212a is large and noticeable and the average measured phase difference 1202a undershoots the expected phase difference 1204a. This undershooting indicates gas or bubbles around the vibrating elements such as the tines 112 and 114.

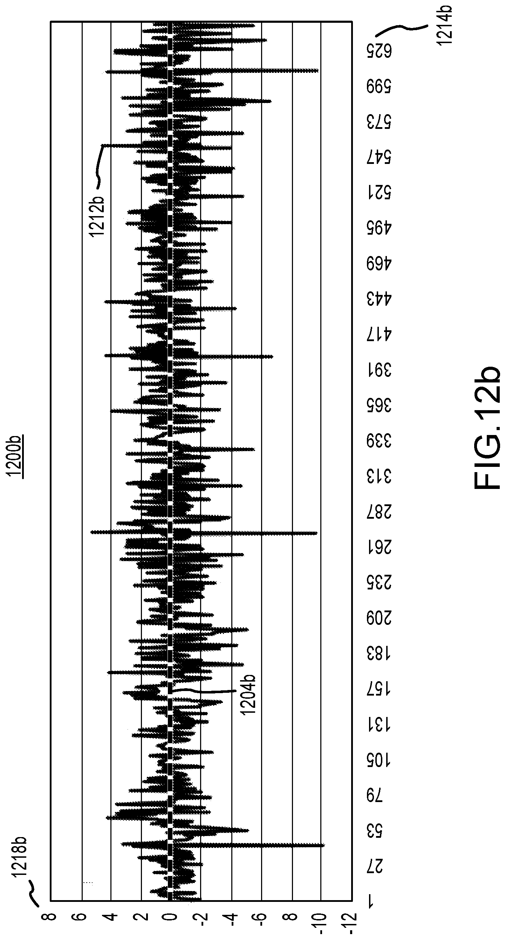

**FIG. 12b** shows a graph of deviation of live phase from expected phase difference when a fork density meter is operating with an entrained gas anomaly, according to an embodiment. The graph 1200b has a target phase difference reference 1204b, a phase deviation 1212b, abscissa 1214b representing a sample number, and an ordinate 1218b representing phase difference deviation from expected in degrees. The average phase deviation 1212b in this embodiment is -.134°, and the deviate from the target phase difference reference 1204b by more than .02°, some as much as -10°. The moving average of phase deviation 1212b is between about 0° and 2°. These are tell-tale signs of a process anomaly. In this case, a gas is creating large deviation spikes in the live phase measurement 1202b.

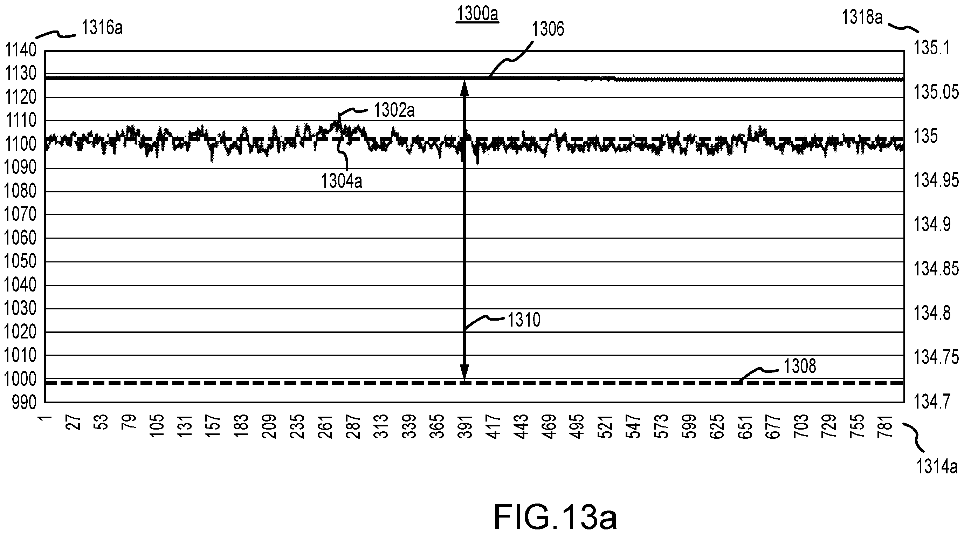

**FIG. 13a** shows a two-axis graph 1300a comparing live phase and density measurements to expected values with respect to time when a fork density meter is operating with a build-up anomaly, according to an embodiment. Graph 1300a has a live phase measurement 1302a, a target phase difference 1304a, a measured density 1306, an expected density 1308, a density deviation 1310, a phase deviation 1312a, an abscissa 1314a representing a sample number, a left ordinate 1316a representing density in kg/m³, and a right ordinate 1318a representing phase difference in degrees. The density deviation 1310 is about 130 kg/m³ with the measured density 1306a greater than the expected density 1308. Little variation in the measured density 1306 can be shown. Also, the phase deviation 1312a is larger than the case without an anomaly and noticeable and the average measured phase difference 1302a swings around the expected phase difference 1304a. This swinging indicates buildup on the vibrating elements such as the tines 112 and 114, and the swings become more noticeable with greater amounts of build-up.

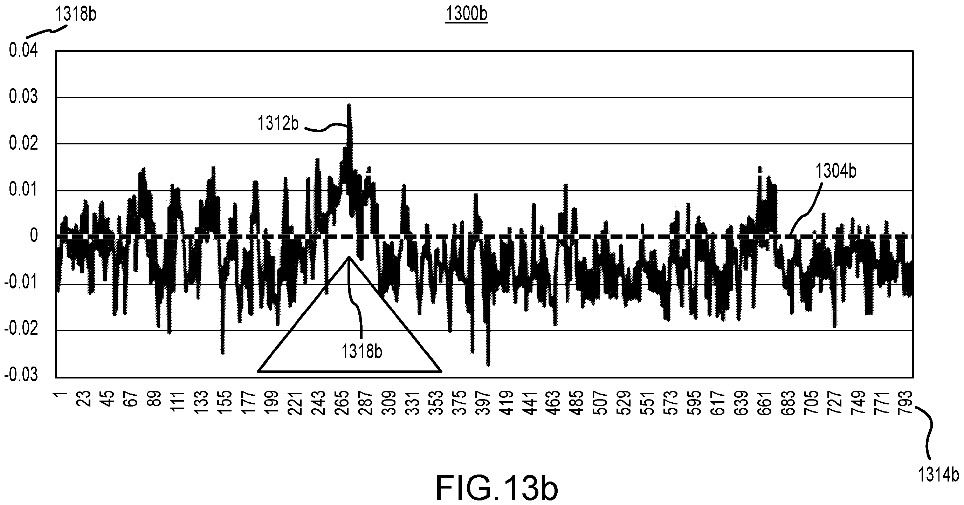

**FIG. 13b** shows a graph of deviation of live phase from expected phase difference when a fork density meter is operating with a build-up anomaly, according to an embodiment. The graph 1300b has a target phase difference reference1304b, a determined triangulation 1306, a phase deviation 1312b, an abscissa 1314b representing a sample number, and an ordinate 1318b representing phase difference deviation from expected in degrees. The average phase difference deviation 1312b in this embodiment is -.134°, and the deviate from the target phase difference reference 1304b by more than .02°, some close to .03°. The moving average phase deviation 1312b is between about 0° and .175°. These are significant, but the triangulation pattern of the measured live phase difference deviation 1302b trend relative to the target phase difference 1304b is a strong tell-tale sign of buildup. This may be even more pronounced when starting up or locking phase.

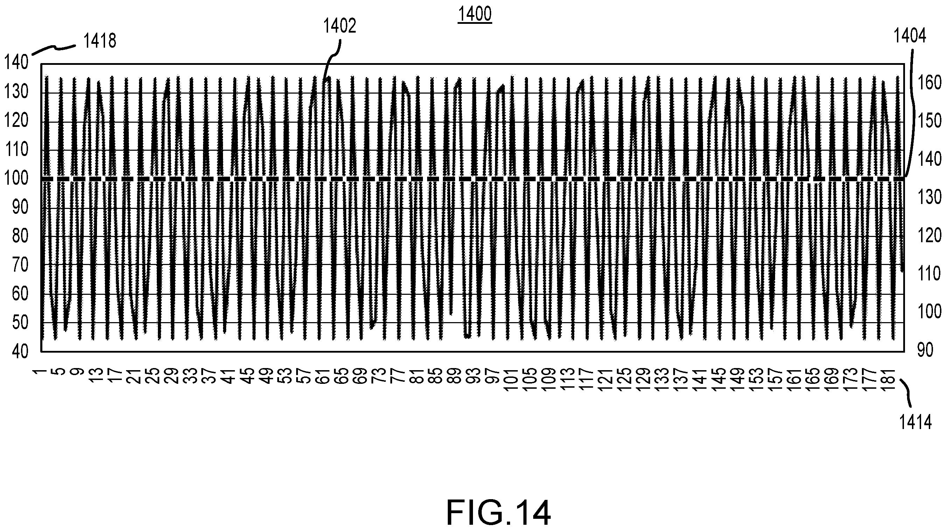

**FIG. 14** shows a two-axis graph 1400 comparing live phase of a fork viscometer to a fork phase with respect to sample number of a fork viscosity meter operating without an anomaly, according to an embodiment. The graph 1400 has a live phase 1402 representing viscosity measurements, a fork phase 1404 representing density measurements, abscissa 1414 representing a sample number, and an ordinate 1418 representing phase difference in degrees. It can be seen that the fork phase of the viscosity meter behaves identically to the live phase measurement of the fork density meter, showing that the deviations and from expected values and associated anomaly determinations and identifications are analogous.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description. When specific numbers representing parameter values are specified, the ranges between all of those numbers as well as ranges above and ranges below those numbers are contemplated and disclosed.

Thus, although specific embodiments are described herein for illustrative purposes, various equivalent modifications are possible within the scope of the present description, as those skilled in the relevant art will recognize. The teachings provided herein can be applied to other methods and apparatuses for determining a vibratory response parameter of a vibratory element, and not just to the embodiments described above and shown in the accompanying figures. Accordingly, the scope of the embodiments described above should be determined from the following claims.

## Claims

1. A method for determining a process anomaly in a fluid flow system, the system having a meter with immersed elements immersed in a fluid of a fluid flow, the method comprising:
determining, by the meter and using a data processing circuit, a measured density of the fluid in the fluid flow system;
determining, using the data processing circuit, whether the fluid flow system is experiencing a density anomaly based on a relationship between the measured density and an expected density of the fluid in the fluid flow system;
determining, using the data processing circuit, a measured phase difference of vibrations of the immersed elements of the meter;
determining, using the data processing circuit, whether the fluid flow system is experiencing a phase anomaly based on a relationship between the measured phase difference and a target phase difference of the vibrations of the immersed elements in the fluid flow; and
identifying, using the data processing circuit, an anomaly of the fluid flow system based on the determination of whether there is a density anomaly and the determination of whether there is a phase anomaly;
wherein the density anomaly is determined to be indicative of a gas entrainment anomaly if the measured density is less than the expected density by at least a threshold density difference;
wherein, if the anomaly of the fluid flow system is identified as a gas entrainment anomaly, determining, using the data processing circuit, whether a gas entrainment anomaly identification may be confused with an erosion anomaly identification by determining whether one or more of the fluid and elements entrained in the fluid are likely to erode the immersed elements based on data stored in the data processing circuit; and
identifying, using the data processing circuit, that the gas entrainment anomaly identification may be confused with an erosion anomaly if the data processing circuit has data indicating that the one or more of the fluid and elements entrained in the flow fluid are likely to erode the immersed elements.

2. A method as claimed in claim 1, further comprising:
identifying, using the data processing circuit, a density anomaly indicative of a build-up anomaly,
wherein the relationship between the measured density and the expected density is the measured density is greater than the expected density by at least a threshold density difference.

3. A method as claimed in claim 2, further comprising:
determining, using the data processing circuit, the relationship between the measured phase difference and the target phase difference by determining one or more of;
the measured phase difference differs from the target phase difference by at least a threshold phase deviation;
a swinging behavior in which the measured phase difference swings above and below from the target phase difference; and
a triangulation behavior of the measured phase difference relative to the target phase difference; and
identifying, using the data processing circuit, a phase anomaly indicative of a build-up anomaly.

4. A method as claimed in claim 1, the identifying further comprising the anomaly of the fluid flow system identified as a build-up anomaly.

5. A method as claimed in claims 2 to 4, further comprising:
determining, using the data processing circuit, whether a build-up anomaly identification may be confused with a corrosion anomaly identification by determining whether one or more of the fluid and elements entrained in the fluid are likely to corrode the immersed elements based on data stored in the data processing circuit; and
identifying, using the data processing circuit, that the build-up anomaly identification may be confused with a corrosion anomaly if the data processing circuit has data indicating that the one or more of the flow fluid and elements entrained in the flow fluid are likely to corrode the immersed elements.

6. A method as claimed in claims 1 to 5, further comprising:
responding to the anomaly, using the data processing circuit, by one or more of, notifying a user of the gas entrainment anomaly, indicating on a meter that the gas entrainment anomaly has occurred, changing the characteristics of the fluid or fluid flow in response to the gas entrainment anomaly, and storing data representing the gas entrainment anomaly.

7. A method as claimed in claim 6, the changing flow characteristics of the fluid or fluid flow further comprising one or more of increasing a velocity of fluid flow and increasing a temperature of the fluid in the fluid flow.

8. A method as claimed in claim 1, wherein the data processing circuit determines the fluid flow system is not experiencing any density anomaly, but the fluid flow is experiencing at least one phase anomaly, the anomaly identified being one or more of a manufacturing anomaly and an installation anomaly.

9. A method as in claims 1 to 8, wherein the anomaly is identified when the meter is one or more of installed, operating, and is not removed from operation.

10. A data processing circuit (132) communicatively coupled to and/or integrated into a meter electronics (20) of a meter, the meter having a vibratory element (104) with tines (112, 114) a driver (122) for driving vibrations in the tines (112, 114), and at least one sensor (124) to measure vibrations of tines (112, 114), the meter electronics (20) configured to determine a measured phase difference and a measured density, the data processing circuit (132) configured to:
determine a measured density of a fluid in the fluid flow system;
determine whether the fluid flow system is experiencing a density anomaly based on a relationship between the measured density and an expected density of the fluid in the fluid flow system;
determine a measured phase difference of vibrations of the tines (112, 114) of the meter;
determine whether the fluid flow system is experiencing a phase anomaly based on a relationship between the measured phase difference and a target phase difference of the vibrations of the tines (112, 114) in the fluid flow; and
identify an anomaly of the fluid flow system based on the determination of a density anomaly and the determination of a phase anomaly;
identify a density anomaly indicative of a gas entrainment anomaly if the measured density is less than the expected density by at least a threshold density difference;
determine, using the data processing circuit, whether a gas entrainment anomaly identification may be confused with an erosion anomaly identification by determining whether one or more of the fluid and elements entrained in the fluid are likely to erode the tines (112, 114) based on data stored in the data processing circuit; and
identify that the gas entrainment anomaly identification may be confused with an erosion anomaly if the data processing circuit (132) has data indicating that the one or more of the fluid and elements entrained in the flow fluid are likely to erode the tines (112, 114).

11. A data processing circuit (132) as claimed in claim 10, further configured to:
determine the relationship between the measured density and the expected density by determining the measured density is greater than the expected density by at least a threshold density difference; and
identify a density anomaly indicative of a build-up anomaly.

12. A data processing circuit (132) as claimed in claim 11, further configured to:
determine the relationship between the measured phase difference and the target phase difference by determining one or more of;
the measured phase difference differs from the target phase difference by at least a threshold phase deviation;
a swinging behavior in which the measured phase difference swings above and below the target phase difference; and
a triangulation behavior of the measured phase difference relative to the target phase difference; and
identify a phase anomaly indicative of a build-up anomaly.

13. A data processing circuit (132) as claimed in claims 10 to 12 the identify an anomaly of the fluid system further comprising identify the anomaly of the fluid flow system as a build-up anomaly.

14. A data processing circuit (132) as claimed in claims 11 to 13, further configured to:
determine whether a build-up anomaly identification may be confused with a corrosion anomaly identification by determining whether one or more of the fluid and elements entrained in the fluid are likely to corrode the tines (112, 114) based on data stored in the data processing circuit; and
identify that the build-up anomaly identification may be confused with a corrosion anomaly if the data processing circuit (132) has data indicating that the one or more of the flow fluid and elements entrained in the flow fluid are likely to corrode the tines (112, 114).

15. A data processing circuit (132) as claimed in claims 10 to 14, further configured to:
respond to the anomaly by one or more of, notifying a user of the anomaly, indicating on a meter that the anomaly has occurred, changing the characteristics of the fluid or fluid flow in response to the anomaly, and storing data representing the anomaly.

16. A data processing circuit (132) as claimed in claims 10 to 15, wherein the anomaly is identified when the meter is one or more of installed, operating, and is not removed from operation.

## Patentansprüche

1. Verfahren zum Bestimmen einer Prozessanomalie in einem Fluidströmungssystem, wobei das System einen Zähler mit eingetauchten Elementen aufweist, die in ein Fluid einer Fluidströmung eingetaucht sind, wobei das Verfahren Folgendes umfasst:
Bestimmen, durch den Zähler und unter Verwendung einer Datenverarbeitungsschaltung, einer gemessenen Dichte des Fluids in dem Fluidströmungssystem;
Bestimmen, unter Verwendung der Datenverarbeitungsschaltung, ob das Fluidströmungssystem eine Dichteanomalie erfährt, basierend auf einer Beziehung zwischen der gemessenen Dichte und einer erwarteten Dichte des Fluids in dem Fluidströmungssystem;
Bestimmen, unter Verwendung der Datenverarbeitungsschaltung, einer gemessenen Phasendifferenz von Vibrationen der eingetauchten Elemente des Zählers;
Bestimmen, unter Verwendung der Datenverarbeitungsschaltung, ob das Fluidströmungssystem eine Phasenanomalie erfährt, basierend auf einer Beziehung zwischen der gemessenen Phasendifferenz und einer Zielphasendifferenz der Schwingungen der eingetauchten Elemente in der Fluidströmung; und
Identifizieren, unter Verwendung der Datenverarbeitungsschaltung, einer Anomalie des Fluidströmungssystems basierend auf der Bestimmung, ob es eine Dichteanomalie gibt und der Bestimmung, ob es eine Phasenanomalie gibt;
wobei die Dichteanomalie als Hinweis auf eine Gasmitnahmeanomalie bestimmt wird, wenn die gemessene Dichte um mindestens eine Schwellendichte-Differenz geringer ist als die erwartete Dichte;
wobei, wenn die Anomalie des Fluidströmungssystems als Gasmitnahmeanomalie identifiziert wird, unter Verwendung der Datenverarbeitungsschaltung bestimmt wird, ob eine Gasmitnahmeanomalie-Identifikation mit einer Erosionsanomalie-Identifikation verwechselt werden kann, durch Bestimmen, ob eines oder mehrere des Fluids und der in dem Fluid mitgerissenen Elemente wahrscheinlich die eingetauchten Elemente erodieren werden, basierend auf Daten, die in der Datenverarbeitungsschaltung gespeichert sind; und
Identifizieren, unter Verwendung der Datenverarbeitungsschaltung, dass die Gasmitnahmeanomalie-Identifikation mit einer Erosionsanomalie verwechselt werden kann, wenn die Datenverarbeitungsschaltung über Daten verfügt, die anzeigen, dass das eine oder mehrere des Fluids und der Elemente, die in dem Strömungsfluid mitgeführt werden, wahrscheinlich die eingetauchten Elemente erodieren.

2. Verfahren nach Anspruch 1, das ferner Folgendes umfasst:
Identifizieren, unter Verwendung der Datenverarbeitungsschaltung, einer Dichteanomalie, die auf eine Anhäufungsanomalie hinweist,
wobei die Beziehung zwischen der gemessenen Dichte und der erwarteten Dichte darin besteht, dass die gemessene Dichte um mindestens eine Schwellendichte-Differenz größer ist als die erwartete Dichte.

3. Verfahren nach Anspruch 2, das ferner Folgendes umfasst:
Bestimmen, unter Verwendung der Datenverarbeitungsschaltung, des Verhältnisses zwischen der gemessenen Phasendifferenz und der Zielphasendifferenz durch Bestimmen eines oder mehrerer der Folgenden:
die gemessene Phasendifferenz weicht von der Zielphasendifferenz mindestens um eine Schwellenwert-Phasenabweichung ab;
ein Schwankungsverhalten, bei dem die gemessene Phasendifferenz oberhalb und unterhalb der Zielphasendifferenz schwankt; und
ein Triangulationsverhalten der gemessenen Phasendifferenz relativ zu der Zielphasendifferenz; und
Identifizieren, unter Verwendung der Datenverarbeitungsschaltung, einer Phasenanomalie, die auf eine Anhäufungsanomalie hinweist.

4. Verfahren nach Anspruch 1, wobei die Identifizierung ferner die Anomalie des Fluidströmungssystems umfasst, die als eine Anhäufungsanomalie identifiziert wird.

5. Verfahren nach einem der Ansprüche 2 bis 4, das ferner Folgendes umfasst:
Bestimmen, unter Verwendung der Datenverarbeitungsschaltung, ob eine Identifizierung einer Anhäufungsanomalie mit einer Identifizierung einer Korrosionsanomalie verwechselt werden kann, durch Bestimmen, ob eines oder mehrere des Fluids und der in dem Fluid mitgerissenen Elemente wahrscheinlich die eingetauchten Elemente korrodieren werden, basierend auf Daten, die in der Datenverarbeitungsschaltung gespeichert sind; und
Identifizieren, unter Verwendung der Datenverarbeitungsschaltung, dass die Anhäufungsanomalie-Identifikation mit einer Korrosionsanomalie verwechselt werden kann, wenn die Datenverarbeitungsschaltung über Daten verfügt, die anzeigen, dass das eine oder mehrere des Strömungsfluids und der in dem Strömungsfluid mitgeführten Elemente wahrscheinlich die eingetauchten Elemente korrodieren.

6. Verfahren nach einem der Ansprüche 1 bis 5, das ferner Folgendes umfasst:
Reagieren auf die Anomalie unter Verwendung der Datenverarbeitungsschaltung durch eines oder mehrere der Folgenden: Benachrichtigen eines Benutzers über die Gasmitnahmeanomalie, Anzeigen auf einem Zähler, dass die Gasmitnahmeanomalie aufgetreten ist, Ändern der Eigenschaften des Fluids oder der Fluidströmung als Reaktion auf die Gasmitnahmeanomalie und Speichern von Daten, die die Gasmitnahmeanomalie darstellen.

7. Verfahren nach Anspruch 6, wobei die Änderung der Strömungseigenschaften des Fluids oder der Fluidströmung ferner eines oder mehrere der Folgenden umfasst: Erhöhung der Geschwindigkeit der Fluidströmung und Erhöhung der Temperatur des Fluids in der Fluidströmung.

8. Verfahren nach Anspruch 1, wobei die Datenverarbeitungsschaltung bestimmt, dass das Fluidströmungssystem keine Dichteanomalie erfährt, die Fluidströmung jedoch mindestens eine Phasenanomalie erfährt, wobei die identifizierte Anomalie eines oder mehrere von einer Herstellungsanomalie und einer Installationsanomalie ist.

9. Verfahren nach einem der Ansprüche 1 bis 8, wobei die Anomalie identifiziert wird, wenn der Zähler installiert oder in Betrieb ist und nicht außer Betrieb genommen wird.

10. Datenverarbeitungsschaltung (132), die mit der Zählerelektronik (20) eines Zählers kommunikativ gekoppelt und/oder darin integriert ist, wobei der Zähler ein Vibrationselement (104) mit Zinken (112, 114), einen Treiber (122) zum Antreiben von Vibrationen in den Zinken (112, 114) und mindestens einen Sensor (124) zum Messen von Vibrationen der Zinken (112, 114) aufweist, wobei die Zählerenelektronik (20) dafür konfiguriert ist, eine gemessene Phasendifferenz und eine gemessene Dichte zu bestimmen, wobei die Datenverarbeitungsschaltung (132) für Folgendes konfiguriert ist:
Bestimmen einer gemessenen Dichte eines Fluids in dem Fluidströmungssystem;
Bestimmen, ob das Fluidströmungssystem eine Dichteanomalie erfährt, basierend auf einer Beziehung zwischen der gemessenen Dichte und einer erwarteten Dichte des Fluids in dem Fluidströmungssystem;
Bestimmen einer gemessenen Phasendifferenz der Vibrationen der Zinken (112, 114) des Zählers;
Bestimmen, ob das Fluidströmungssystem eine Phasenanomalie erfährt, basierend auf einer Beziehung zwischen der gemessenen Phasendifferenz und einer Zielphasendifferenz der Schwingungen der Zinken (112, 114) in der Fluidströmung; und
Identifizieren einer Anomalie des Fluidströmungssystems basierend auf der Bestimmung einer Dichteanomalie und der Bestimmung einer Phasenanomalie;
Identifizieren einer Dichteanomalie, die auf eine Gasmitnahmeanomalie hinweist, wenn die gemessene Dichte um mindestens eine Schwellendichte-Differenz geringer ist als die erwartete Dichte;
Bestimmen, unter Verwendung der Datenverarbeitungsschaltung, ob eine Gasmitnahme-Anomalie-Identifikation mit einer Erosions-Anomalie-Identifikation verwechselt werden kann, durch Bestimmen, ob eines oder mehrere des Fluids und der in dem Fluid mitgerissenen Elemente wahrscheinlich die Zinken (112, 114) erodieren werden, basierend auf Daten, die in der Datenverarbeitungsschaltung gespeichert sind; und
Identifizieren, dass die Gasmitnahmeanomalie-Identifikation mit einer Erosionsanomalie verwechselt werden kann, wenn die Datenverarbeitungsschaltung (132) über Daten verfügt, die anzeigen, dass das eine oder mehrere des Fluids und der Elemente, die in dem Strömungsfluid mitgeführt werden, wahrscheinlich die Zinken (112, 114) erodieren.

11. Datenverarbeitungsschaltung (132) nach Anspruch 10, die ferner für Folgendes konfiguriert ist:
Bestimmen der Beziehung zwischen der gemessenen Dichte und der erwarteten Dichte, indem bestimmt wird, dass die gemessene Dichte mindestens um eine Schwellendichte-Differenz größer ist als die erwartete Dichte; und
Identifizieren einer Dichteanomalie, die auf eine Anhäufungsanomalie hinweist.

12. Datenverarbeitungsschaltung (132) nach Anspruch 11, die ferner für Folgendes konfiguriert ist:
Bestimmen des Verhältnisses zwischen der gemessenen Phasendifferenz und der Zielphasendifferenz durch Bestimmen eines oder mehrerer der Folgenden:
die gemessene Phasendifferenz weicht von der Zielphasendifferenz mindestens um eine Schwellenwert-Phasenabweichung ab;
ein Schwankungsverhalten, bei dem die gemessene Phasendifferenz oberhalb und unterhalb der Zielphasendifferenz schwankt; und
ein Triangulationsverhalten der gemessenen Phasendifferenz relativ zu der Zielphasendifferenz; und
Identifizieren einer Phasenanomalie, die auf eine Anhäufungsanomalie hinweist.

13. Datenverarbeitungsschaltung (132) nach einem der Ansprüche 10 bis 12, wobei das Identifizieren einer Anomalie des Fluidsystems ferner das Identifizieren der Anomalie des Fluidströmungssystems als eine Anhäufungsanomalie umfasst.

14. Datenverarbeitungsschaltung (132) nach einem der Ansprüche 11 bis 13, die ferner für Folgendes konfiguriert ist:
Bestimmen, ob die Identifizierung einer Anhäufungsanomalie mit der Identifizierung einer Korrosionsanomalie verwechselt werden kann, indem basierend auf den in der Datenverarbeitungsschaltung gespeicherten Daten bestimmt wird, ob eines oder mehrere des Fluids und der in dem Fluid mitgeführten Elemente wahrscheinlich die Zinken (112, 114) korrodieren; und
Identifizieren, dass die Identifizierung der Anhäufungsanomalie mit einer Korrosionsanomalie verwechselt werden kann, wenn die Datenverarbeitungsschaltung (132) über Daten verfügt, die darauf hinweisen, dass das eines oder mehrere des Strömungsfluids und der in dem Strömungsfluid mitgeführten Elemente die Zinken (112, 114) wahrscheinlich korrodieren werden.

15. Datenverarbeitungsschaltung (132) nach einem der Ansprüche 10 bis 14, die ferner für Folgendes konfiguriert ist:
Reagieren auf die Anomalie durch eines oder mehrere der Folgenden: Benachrichtigen eines Benutzers über die Anomalie, Anzeigen auf einem Zähler, dass die Anomalie aufgetreten ist, Ändern der Eigenschaften des Fluids oder der Fluidströmung als Reaktion auf die Anomalie und Speichern von Daten, die die Anomalie darstellen.

16. Datenverarbeitungsschaltung (132) nach einem der Ansprüche 10 bis 15, wobei die Anomalie identifiziert wird, wenn der Zähler installiert oder in Betrieb ist und nicht außer Betrieb genommen wird.

## Revendications

1. Procédé de détermination d'une anomalie de traitement dans un système d'écoulement de fluide, le système comportant un compteur avec des éléments immergés dans un fluide d'un écoulement de fluide, le procédé consistant à :
déterminer, par le compteur et au moyen d'un circuit de traitement de données, une masse volumique mesurée du fluide dans le système d'écoulement de fluide ;
déterminer, au moyen du circuit de traitement de données, si le système d'écoulement de fluide présente une anomalie de masse volumique sur la base d'une relation entre la masse volumique mesurée et une masse volumique attendue du fluide dans le système d'écoulement de fluide ;
déterminer, au moyen du circuit de traitement de données, une différence de phase mesurée de vibrations des éléments immergés du compteur ;
déterminer, au moyen du circuit de traitement de données, si le système d'écoulement de fluide présente une anomalie de phase sur la base d'une relation entre la différence de phase mesurée et une différence de phase cible des vibrations des éléments immergés dans l'écoulement de fluide ; et
identifier, au moyen du circuit de traitement de données, une anomalie du système d'écoulement de fluide sur la base de la détermination de l'existence d'une anomalie de masse volumique et de la détermination de l'existence d'une anomalie de phase ;
l'anomalie de masse volumique étant considérée comme indiquant une anomalie d'entraînement de gaz si la masse volumique mesurée est inférieure à la masse volumique attendue d'au moins un seuil de différence de masse volumique ;
si l'anomalie du système d'écoulement de fluide est identifiée comme une anomalie d'entraînement de gaz, déterminer, au moyen du circuit de traitement de donnée, si une identification d'anomalie d'entraînement de gaz peut être confondue avec une identification d'anomalie d'érosion en déterminant si le fluide et/ou les éléments entraînés dans le fluide sont susceptibles d'éroder les éléments immergés sur la base de données stockées dans le circuit de traitement de données ; et
identifier, au moyen du circuit de traitement de données, que l'identification d'anomalie d'entraînement de gaz peut être confondue avec une anomalie d'érosion si le circuit de traitement de données dispose de données indiquant que le fluide et/ou les éléments entraînés dans le fluide d'écoulement sont susceptibles d'éroder les éléments immergés.

2. Procédé selon la revendication 1, consistant en outre à :
identifier, au moyen du circuit de traitement de données, une anomalie de masse volumique indiquant une anomalie d'accumulation,
la relation entre la masse volumique mesurée et la masse volumique attendue étant que la masse volumique mesurée est supérieure à la masse volumique attendue d'au moins un seuil de différence de masse volumique.

3. Procédé selon la revendication 2, consistant en outre à :
déterminer, au moyen du circuit de traitement de données, la relation entre la différence de phase mesurée et la différence de phase cible en déterminant un ou plusieurs des comportements suivants :
la différence de phase mesurée diffère de la différence de phase cible d'au moins un seuil d'écart de phase ;
un comportement d'oscillation dans lequel la différence de phase mesurée oscille au-dessus et au-dessous de la différence de phase cible ; et
un comportement de triangulation de la différence de phase mesurée par rapport à la différence de phase cible ; et
identifier, au moyen du circuit de traitement de données, une anomalie de phase indiquant une anomalie d'accumulation.

4. Procédé selon la revendication 1, dans lequel l'identification comprend en outre l'anomalie du système d'écoulement de fluide identifiée comme une anomalie d'accumulation.

5. Procédé selon les revendications 2 à 4, consistant en outre à :
déterminer, au moyen du circuit de traitement de donnée, si une identification d'anomalie d'accumulation peut être confondue avec une identification d'anomalie de corrosion en déterminant si le fluide et/ou les éléments entraînés dans le fluide sont susceptibles de corroder les éléments immergés sur la base de données stockées dans le circuit de traitement de données ; et
identifier, au moyen du circuit de traitement de données, que l'identification d'anomalie d'accumulation peut être confondue avec une anomalie de corrosion si le circuit de traitement de données dispose de données indiquant que le fluide d'écoulement et/ou les éléments entraînés dans le fluide d'écoulement sont susceptibles de corroder les éléments immergés.

6. Procédé selon les revendications 1 à 5, consistant en outre à :
répondre à l'anomalie, au moyen du circuit de traitement de données, par une ou plusieurs actions parmi : notifier l'anomalie d'entraînement de gaz à un utilisateur, indiquer sur un compteur que l'anomalie d'entraînement de gaz s'est produite, modifier les caractéristiques du fluide ou de l'écoulement de fluide en réponse à l'anomalie d'entraînement de gaz, et stocker des données représentant l'anomalie d'entraînement de gaz.

7. Procédé selon la revendication 6, dans lequel la modification des caractéristiques d'écoulement du fluide ou de l'écoulement de fluide consiste en outre à augmenter une vitesse de l'écoulement de fluide et/ou à augmenter une température du fluide dans l'écoulement de fluide.

8. Procédé selon la revendication 1, dans lequel le circuit de traitement de données détermine que le système d'écoulement de fluide ne subit aucune anomalie de masse volumique, mais que l'écoulement de fluide subit au moins une anomalie de phase, l'anomalie identifiée étant une anomalie de fabrication et/ou une anomalie d'installation.

9. Procédé selon les revendications 1 à 8, dans lequel l'anomalie est identifiée lorsque le compteur est installé et/ou est en fonctionnement et/ou n'est pas retiré du fonctionnement.

10. Circuit de traitement de données (132) couplé en communication et/ou intégré à une électronique de comptage (20) d'un compteur, le compteur comportant un élément vibratoire (104) avec des dents (112, 114), un excitateur (122) pour provoquer des vibrations dans les dents (112, 114) par excitation, et au moins un capteur (124) pour mesurer des vibrations de dents (112, 114), l'électronique de comptage (20) étant configurée pour déterminer une différence de phase mesurée et une masse volumique mesurée, le circuit de traitement de données (132) étant configuré pour :
déterminer une masse volumique mesurée d'un fluide dans le système d'écoulement de fluide ;
déterminer si le système d'écoulement de fluide présente une anomalie de masse volumique sur la base d'une relation entre la masse volumique mesurée et une masse volumique attendue du fluide dans le système d'écoulement de fluide ;
déterminer une différence de phase mesurée de vibrations des dents (112, 114) du compteur ;
déterminer si le système d'écoulement de fluide présente une anomalie de phase sur la base d'une relation entre la différence de phase mesurée et une différence de phase cible des vibrations des dents (112, 114) dans l'écoulement de fluide ; et
identifier une anomalie du système d'écoulement de fluide sur la base de la détermination d'une anomalie de masse volumique et de la détermination d'une anomalie de phase ;
identifier une anomalie de masse volumique indiquant une anomalie d'entraînement de gaz si la masse volumique mesurée est inférieure à la masse volumique attendue d'au moins un seuil de différence de masse volumique ;
déterminer, au moyen du circuit de traitement de donnée, si une identification d'anomalie d'entraînement de gaz peut être confondue avec une identification d'anomalie d'érosion en déterminant si le fluide et/ou les éléments entraînés dans le fluide sont susceptibles d'éroder les dents (112, 114) sur la base de données stockées dans le circuit de traitement de données ; et
identifier que l'identification d'anomalie d'entraînement de gaz peut être confondue avec une anomalie d'érosion si le circuit de traitement de données (132) dispose de données indiquant que le fluide et/ou les éléments entraînés dans le fluide d'écoulement sont susceptibles d'éroder les dents (112, 114).

11. Circuit de traitement de données (132) selon la revendication 10, configuré en outre pour :
déterminer la relation entre la masse volumique mesurée et la masse volumique attendue en déterminant que la masse volumique mesurée est supérieure à la masse volumique attendue d'au moins un seuil de différence de masse volumique ; et
identifier une anomalie de masse volumique indiquant une anomalie d'accumulation.

12. Circuit de traitement de données (132) selon la revendication 11, configuré en outre pour :
déterminer la relation entre la différence de phase mesurée et la différence de phase cible en déterminant un ou plusieurs des comportements suivants :
la différence de phase mesurée diffère de la différence de phase cible d'au moins un seuil d'écart de phase ;
un comportement d'oscillation dans lequel la différence de phase mesurée oscille au-dessus et au-dessous de la différence de phase cible ; et
un comportement de triangulation de la différence de phase mesurée par rapport à la différence de phase cible ; et
identifier une anomalie de phase indiquant une anomalie d'accumulation.

13. Circuit de traitement de données (132) selon les revendications 10 à 12, dans lequel l'identification d'une anomalie du système de fluide consiste en outre à identifier l'anomalie du système d'écoulement de fluide comme une anomalie d'accumulation.

14. Circuit de traitement de données (132) selon les revendications 11 à 13, configuré en outre pour :
déterminer si une identification d'anomalie d'accumulation peut être confondue avec une identification d'anomalie de corrosion en déterminant si le fluide et/ou les éléments entraînés dans le fluide sont susceptibles de corroder les dents (112, 114) sur la base de données stockées dans le circuit de traitement de données ; et
identifier que l'identification d'anomalie d'accumulation peut être confondue avec une anomalie de corrosion si le circuit de traitement de données (132) dispose de données indiquant que le fluide d'écoulement et/ou les éléments entraînés dans le fluide d'écoulement sont susceptibles de corroder les dents (112, 114).

15. Circuit de traitement de données (132) selon les revendications 10 à 14, configuré en outre pour :
répondre à l'anomalie par une ou plusieurs actions parmi : notifier l'anomalie à un utilisateur, indiquer sur un compteur que l'anomalie s'est produite, modifier les caractéristiques du fluide ou de l'écoulement de fluide en réponse à l'anomalie, et stocker des données représentant l'anomalie.

16. Circuit de traitement de données (132) selon les revendications 10 à 15, dans lequel l'anomalie est identifiée lorsque le compteur est installé et/ou est en fonctionnement et/ou n'est pas retiré du fonctionnement.
